# EUROPEAN PATENT APPLICATION

(11) **EP 4 618 207 A1**
(43) Date of publication of application: **17.09.2025**
(21) Application number: 23929825.0
(22) Date of filing: 13.09.2023
(51) Int. Cl.: H01M 10/04, H01M 50/40, H01M 50/10

(54) **BATTERY CELL, BATTERY AND ELECTRIC DEVICE**

(30) Priority: 31.03.2023 CN 202310341097
(71) Applicant: Contemporary Amperex Technology (Hong Kong) Limited, Hong Kong (HK)
(72) Inventor: KE, Haibo, Ningde, Fujian 352100 (CN); MAO, Guoan, Ningde, Fujian 352100 (CN); LI, Quankun, Ningde, Fujian 352100 (CN); HUANG, Shoujun, Ningde, Fujian 352100 (CN); GAO, Kai, Ningde, Fujian 352100 (CN); CHEN, Yanlin, Ningde, Fujian 352100 (CN)
(74) Representative: Behr, Wolfgang
(86) International application number: PCT/CN2023/118648
(87) International publication number: WO 2024/198251

(57) **Abstract**

A battery cell, a battery and an electric device. The battery cell (100) comprises a casing (110), an electrode assembly (120), an isolating structure (170), and an insulating piece (160), wherein the casing (110) is provided with an inner cavity and a first wall (111); the electrode assembly (120) is arranged in the inner cavity, the isolating structure (170) is at least partially located between the first wall (111) and the electrode assembly (120), and the isolating structure (170) is provided with a first through hole (150); and the insulating piece (160) comprises a first portion (161), and the first portion (161) covers the first through hole (150). In the battery cell (100), the first portion (161) of the insulating piece (160) covers the first through hole (150), such that the probability of powder on one side of the electrode assembly (120) moving to one side of the first wall (111) through the first through hole (150) is reduced to a certain extent, thereby improving the reliability of the battery cell (100).

## Description

The present application claims priority to Application No. 202310341097.1, entitled "BATTERY CELL, BATTERY AND ELECTRIC DEVICE" and filed on March 31, 2023, the content of which is incorporated herein by reference.

### TECHNICAL FIELD

The present application relates to the technical field of batteries, and in particular, to a battery cell, a battery, and an electric device.

### BACKGROUND

In the production process of a battery, a separation structure is arranged between the electrode assembly and the shell, and through holes are provided in the separation structure. Powder on one side of the electrode assembly easily moves from the through holes to the position between the separation structure and the shell, causing short circuit or corrosion of the battery cell.

### SUMMARY

An objective of embodiments of the present application is to provide a battery cell, a battery, and an electric device, to solve the technical problem of short circuit or corrosion of the battery cell in the prior art.

In order to achieve the above objective, the present application adopts the following technical solutions:

In a first aspect, provided is a battery cell, which includes:
a shell, provided with an inner cavity, and provided with a first wall;
an electrode assembly, arranged in the inner cavity;
a separation structure, arranged between the first wall and the electrode assembly, and provided with first through holes; and
insulating sheets, including first portions covering the first through holes.

In this arrangement, the electrode assembly is located in the shell, and the separation structure is located between the first wall of the shell and the electrode assembly. As the insulating sheets cover the first through holes, the arrangement of the insulating sheets may reduce the probability that the powder on one side of the electrode assembly moves to one side of the first wall through the first through holes to a certain extent, thereby improving the reliability of the battery cell.

In one possible design, the separation structure is provided with a plurality of first through holes, and the insulating sheets cover all of the first through holes.

In this arrangement, as the insulating sheets cover all of the first through holes, the probability that the powder on one side of the electrode assembly moves to one side of the first wall through the first through holes is reduced under the condition that a plurality of first through holes are provided.

In one possible design, the number of the insulating sheets is equal to the number of the first through holes, the insulating sheets are arranged in one-to-one correspondence with the first through holes, and the insulating sheets cover the corresponding first through holes; or one insulating sheet is provided, and the one insulating sheet covers all of the first through holes.

In this arrangement, under the condition that a first through hole is arranged in one-to-one correspondence with an insulating sheet, the dimension of each insulating sheet is relatively small, thus reducing the occupied space of the insulating sheet. Under the condition that one insulating sheet is used to cover all of the first through holes, the assembling efficiency of the insulating sheet is relatively high.

In one possible design, the first portion is adhered to an opening of the first through hole.

In this arrangement, the first portion is fixed by adhering, such that the first portion has a better covering effect on the first through hole.

In one possible design, the first portion is located on one side of the separation structure facing the first wall.

In this arrangement, during assembly, the electrode assembly may be connected to the separation structure, and then the first portion covers the separation structure and is arranged on one side of the separation structure facing the first wall, so as to facilitate the operation of connecting the first portion to the separation structure after the separation structure is connected to the electrode assembly.

In one possible design, the separation structure includes a baffle and an insulating film, the baffle is located between the electrode assembly and the first wall, the insulating film is at least partially located between the electrode assembly and the first wall, the first through hole includes a first hole segment and a second hole segment which are oppositely arranged and communicate, the first hole segment is arranged on the insulating film, the second hole segment is arranged on the baffle, and the first portion covers an opening on one side of the first hole segment distal to the second hole segment or an opening on one side of the second hole segment distal to the first hole segment.

In this arrangement, as the insulating film is provided with the first hole segment and the baffle is provided with the second hole segment, the insulating film and the baffle may be positioned through the first hole segment and the second hole segment. As the first portion covers the side of the first hole segment distal to the second hole segment, or the first portion covers the side of the second hole segment distal to the first hole segment, the connection of the first portion may be performed after the insulating film is connected to the baffle.

In one possible design, the insulating film is folded to wrap the electrode assembly and forms first folded edges and second folded edges overlapping each other on side edges of the electrode assembly, the insulating sheets include second portions, the second portions fix the first folded edges and the second folded edges, and the first portions are connected to the second portions.

In this arrangement, the insulating sheet can not only cover the first through holes, but also fix the first folded edge and the second folded edge. As the insulating sheet includes the first portion and the second portion that are connected to each other, the area of contact between the insulating sheet and the separation structure increases, thus improving the connection stability between the insulating sheet and the separation structure.

In one possible design, in a first direction, the second portion is spaced apart from at least one edge of the separation structure in the first direction, and the first direction is parallel to a width direction of the first wall.

In this arrangement, as the second portion is spaced apart from at least one edge of the separation structure, that is, in the first direction, the dimension of the second portion is smaller than that of the separation structure, the second portion can be smoothly adhered to the insulating film, thus reducing the occupied space of the second portion.

In one possible design, in the first direction, the second portion is equidistant from two side edges of the separation structure.

In this arrangement, the second portion is adhered to the middle area of the insulating film, facilitating the fixing of the first folded edge and the second folded edge.

In one possible design, in the first direction, the width of the shell is W1, and the width of the second portion is W2, where 0.1 ≤ W2/W1 ≤ 0.9.

In this arrangement, the width of the second portion may be set according to the width of the shell for satisfying the requirement of fixing the first folded edge and the second folded edge.

In one possible design, 0.25 ≤ W2/W1 ≤ 0.75.

In this arrangement, the second portion occupies a small space on the basis of the width of the second portion satisfying the requirement of fixing the first folded edge and the second folded edge.

In one possible design, in a height direction of the electrode assembly, the second portion has a dimension of 10 mm to 80 mm.

In this arrangement, the height of the second portion may be set to satisfy the requirement of fixing the first folded edge and the second folded edge.

In one possible design, in a height direction of the electrode assembly, the second portion has a dimension of 15 mm to 50 mm.

In this arrangement, the second portion occupies a small space on the basis of the height of the second portion satisfying the requirement of fixing the first folded edge and the second folded edge.

In one possible design, the baffle is only provided with two holes, and the two holes in the baffle are the first hole segments; the insulating film is only provided with two holes, the two holes in the insulating film are the second hole segments, and the two first hole segments are arranged in one-to-one correspondence with the two second hole segments.

In this arrangement, the baffle is only provided with the first hole segment, and no other holes are provided; the insulating film is only provided with the second hole segment, and no other holes are provided. The first hole segment communicates with the second hole segment in a one-to-one correspondence manner to form the first through hole, the first through hole is blocked by the first portion of the insulating sheet, and therefore the baffle and the insulating sheet have a better blocking effect on the powder on one side of the electrode assembly.

In one possible design, the separation structure further includes support blocks, the baffle is arranged between the insulating film and the first wall, and the support blocks are arranged on one side of the baffle facing the first wall;

the first through holes penetrate through the baffle and the insulating film, and the support blocks are arranged in an area of the baffle where no first through hole is formed; or,

the support blocks are provided with second through holes, the second through hole of at least one of the support blocks and the first through hole are oppositely formed, and the first portion covers the second through hole.

In this arrangement, the separation structure is provided with support blocks, which can enhance the structural strength of the separation structure. When the support blocks are arranged in the area where no first through hole is formed, the first portions cover the first through holes, and when the support blocks are arranged in the area opposite to the first through holes, as the support blocks are provided with the second through holes, and the second through holes are opposite to the first through holes, the first portions can cover the first through holes by covering the second through holes, thereby reducing the probability that the powder on one side of the electrode assembly moves to one side of the first wall through the first through holes.

In a second aspect, provided is a battery, which includes the battery cell according to the above technical solutions.

As the battery includes the battery cell described above, the battery at least has all the beneficial effects of the battery cell, which is not described in detail herein.

In a third aspect, provided is an electric device, where the electric device includes the battery according to the above technical solutions, the battery being configured to provide electric energy.

As the electric device includes the battery described above, the electric device at least has all the beneficial effects of the battery, which is not described in detail herein.

### BRIEF DESCRIPTION OF THE DRAWINGS

To more clearly illustrate the technical solutions in the embodiments of the present application, the drawings required for illustrating the embodiments or description of the prior art are briefly described below. Apparently, the drawings in the following description illustrate merely some embodiments of the present application, and those of ordinary skills in the art may still derive other drawings from these drawings without creative efforts.
FIG. 1 is a schematic structural diagram of an electric device according to an embodiment of the present application;
FIG. 2 is a schematic structural diagram of a battery according to an embodiment of the present application;
FIG. 3 is an exploded view of parts of a battery cell according to a first embodiment of the present application;
FIG. 4 is a schematic diagram showing the relative positions of the insulating sheets and the separation structure in the battery cell of FIG. 3;
FIG. 5 is a schematic structural diagram of the insulating sheet of FIG. 4;
FIG. 6 is an expanded schematic diagram of the insulating sheet in the battery cell of FIG. 3;
FIG. 7 is a schematic structural diagram of a battery cell according to a first embodiment of the present application at a viewing angle;
FIG. 8 is a schematic structural diagram of the battery cell according to the first embodiment of the present application at another viewing angle;
FIG. 9 is a schematic diagram showing the relative position of the insulating sheet and the separation structure in a battery cell according to a second embodiment of the present application;
FIG. 10 is a schematic structural diagram of the insulating sheet of FIG. 9;
FIG. 11 is a schematic structural diagram of the battery cell according to the second embodiment of the present application at a viewing angle;
FIG. 12 is a schematic diagram showing the relative positions of the insulating sheets and the separation structure in a battery cell according to a third embodiment of the present application;
FIG. 13 is a schematic structural diagram of the insulating sheet of FIG. 12;
FIG. 14 is a schematic structural diagram of the battery cell according to the third embodiment of the present application at a viewing angle;
FIG. 15 is a schematic diagram showing the relative positions of the insulating sheets and the separation structure in a battery cell according to a fourth embodiment of the present application;
FIG. 16 is a schematic structural diagram of the insulating sheet of FIG. 15;
FIG. 17 is a schematic structural diagram of the battery cell according to the fourth embodiment of the present application at a viewing angle;
FIG. 18 is a schematic diagram showing the relative positions of the insulating sheets and the separation structure in a battery cell according to a fifth embodiment of the present application;
FIG. 19 is a schematic structural diagram of the battery cell according to the fifth embodiment of the present application at a viewing angle;
FIG. 20 is a schematic diagram showing the relative positions of the insulating sheets and the separation structure in a battery cell according to a sixth embodiment of the present application;
FIG. 21 is a schematic structural diagram of the battery cell according to the sixth embodiment of the present application at a viewing angle;
FIG. 22 is a schematic diagram showing the relative position of the insulating sheet and the separation structure in a battery cell according to a seventh embodiment of the present application;
FIG. 23 is a schematic structural diagram of the battery cell according to the seventh embodiment of the present application at a viewing angle;
FIG. 24 is a schematic diagram showing the relative position of the insulating sheet and the separation structure in a battery cell according to an eighth embodiment of the present application;
FIG. 25 is a schematic structural diagram of the battery cell according to the eighth embodiment of the present application at a viewing angle;
FIG. 26 is a schematic diagram showing the relative positions of the insulating sheets and the separation structure in a battery cell according to a ninth embodiment of the present application; and
FIG. 27 is a schematic structural diagram of the battery cell according to the ninth embodiment of the present application at a viewing angle.

Description of the reference numerals:
1: electric device;
10: battery; 20: control mechanism; 30: driving mechanism;
100: battery cell; 200: case;
101: top cover patch; 102: top cover; 103: adapting piece; 104: protective film;
110: shell; 111: first wall;
120: electrode assembly; 122: tab;
130: insulating film; 131: first film layer; 132: second film layer; 132a: first folded edge; 132b: second folded edge;
140: baffle; 1411: third through hole;
150: first through hole; 151: first hole segment; 152: second hole segment;
160: insulating sheet; 161: first portion; 162: second portion;
170: separation structure;
180: support block; 181: second through hole.

### DETAILED DESCRIPTION

In order to make the technical problems, the technical solutions and the beneficial effects of the present application more apparent, the present application is further described in detail below with reference to the accompanying drawings and embodiments. It should be understood that the specific embodiments described herein are merely illustrative of the present application and do not limit the present application.

In the description of the embodiments of the present application, the term "plurality" refers to more than two (including two).

In the description of the embodiments of the present application, unless otherwise clearly specified and defined, the technical terms "install", "interconnect", "connect", "fix", and the like should be interpreted in their broad senses. For example, "connect" may be "fixedly connect", "detachably connect", or "integrally connect"; "mechanically connect" or "electrically connect"; or "directly interconnect", "indirectly interconnect through an intermediate", "communication between interiors of two elements", or "interaction between two elements". For those of ordinary skill in the art, the specific meanings of the above terms in the embodiments of the present application can be interpreted according to the specific condition.

It should be understood that directions or positional relationships indicated by the terms "length", "width", "upper", "lower", "front", "rear", "left", "right", "vertical", "horizontal", "top", "bottom", "inner", "outer", and the like are those shown based on the accompanying drawings, are merely intended to facilitate and simplify description rather than to indicate or imply that the indicated battery cell or element must have a specific direction and be structured and operated according to the specific direction, and should not be construed as limiting the present application.

In addition, the terms "first" and "second" are used for descriptive purposes only and are not to be construed as indicating or implying relative importance or to implicitly indicate the number of technical features indicated. Thus, features defined by "first" and "second" may explicitly or implicitly include one or more of the features. In the description of the present application, "plurality" refers to two or more, unless otherwise explicitly and specifically defined.

In the embodiments of the present application, the battery cell may be a secondary battery. The secondary battery refers to a battery cell that can be reused by activating the active material through charging after the battery cell is discharged. The battery cell may be a lithium-ion battery, a sodium-ion battery, a sodium-potassium-ion battery, a lithium metal battery, a sodium metal battery, a potassium-sulfur battery, a magnesium-ion battery, a nickel-hydrogen battery, a nickel-cadmium battery, a lead storage battery, and the like, which is not limited in the embodiments of the present application.

As an example, the battery cell may be a cylindrical battery cell, a prismatic battery cell, a soft-pack battery cell, or a battery cell of other shapes. The prismatic battery cell includes a square-housing battery cell, a blade-shaped battery cell, and a multi-prismatic battery, and the multi-prismatic battery is, e.g., a hexagonal prismatic battery.

The battery cell generally includes an electrode assembly. The electrode assembly includes a positive electrode, a negative electrode, and a separator. During the charging and discharging process of the battery cell, active ions (such as lithium ions) are intercalated and deintercalated back and forth between the positive electrode and the negative electrode. The separator is arranged between the positive electrode and the negative electrode to prevent the positive and negative electrodes from short-circuiting while allowing the passage of active ions.

In some embodiments, the positive electrode may be a positive electrode plate, and the positive electrode plate may include a positive electrode current collector and a positive electrode active material disposed on at least one surface of the positive electrode current collector.

As an example, the positive electrode current collector is provided with two surfaces opposite to each other in a thickness direction thereof, and the positive electrode active material is disposed on either or both of the two opposite surfaces of the positive electrode current collector.

As an example, the positive electrode current collector may be a metal foil or a composite current collector. For example, for the metal foil, aluminum or stainless steel treated with silver on the surface, stainless steel, copper, aluminum, nickel, carbon electrode, carbon, nickel, ferrum, or the like may be used. The composite current collector may include a polymer material substrate and a metal layer. The composite current collector may be fabricated by forming a metal material (aluminum, aluminum alloy, nickel, nickel alloy, titanium, titanium alloy, silver and silver alloy, etc.) on a polymer material substrate (such as a substrate made of polypropylene, polyethylene terephthalate, polybutylene terephthalate, polystyrene, and polyethylene).

As an example, the positive electrode active material may include at least one of the following materials: a lithium-containing phosphate, a lithium transition metal oxide, and respective modified compounds thereof. However, the present application is not limited to these materials, and other traditional materials that can be used as positive electrode active materials for batteries may also be used. These positive electrode active materials may be used alone or in combination of two or more. Where, examples of the lithium-containing phosphate may include, but are not limited to, at least one of lithium iron phosphate (such as LiFePO₄ (also referred to as LFP)), a composite material of lithium iron phosphate and carbon, lithium manganese phosphate (such as LiMnPO₄), a composite material of lithium manganese phosphate and carbon, lithium manganese iron phosphate, and a composite material of lithium manganese iron phosphate and carbon.

In some embodiments, the positive electrode may be a foam metal. The foam metal may be foam nickel, foam copper, foam aluminum, foam alloy, foam carbon, or the like. When the foam metal is used as the positive electrode, the surface of the foam metal may not be provided with the positive electrode active material. Certainly, the positive electrode active material may also be provided. As an example, the foam metal may also be filled or/and deposited with a lithium source material, a potassium metal, or a sodium metal; the lithium source material is a lithium metal and/or a lithium-rich material.

In some embodiments, the negative electrode may be a negative electrode plate, and the negative electrode plate may include a negative electrode current collector.

As an example, the negative electrode current collector may be a metal foil, a foam metal, or a composite current collector. For example, for the metal foil, aluminum or stainless steel treated with silver on the surface, stainless steel, copper, aluminum, nickel, carbon electrode, carbon, nickel, titanium, or the like may be used. The composite current collector may include a polymer material substrate and a metal layer. The foam metal may be foam nickel, foam copper, foam aluminum, foam alloy, foam carbon, or the like. The composite current collector may be fabricated by forming a metal material (copper, copper alloy, nickel, nickel alloy, titanium, titanium alloy, silver and silver alloy, etc.) on a polymer material substrate (such as a substrate made of polypropylene, polyethylene terephthalate, polybutylene terephthalate, polystyrene, and polyethylene). As an example, the negative electrode current collector may be a metal foil or a composite current collector. For example, for the metal foil, aluminum or stainless steel treated with silver on the surface, stainless steel, copper, aluminum, nickel, carbon electrode, carbon, nickel, titanium, or the like may be used. The composite current collector may include a polymer material substrate and a metal layer. The composite current collector may be fabricated by forming a metal material (copper, copper alloy, nickel, nickel alloy, iron, titanium alloy, silver and silver alloy, etc.) on a polymer material substrate (such as a substrate made of polypropylene, polyethylene terephthalate, polybutylene terephthalate, polystyrene, and polyethylene).

As an example, the negative electrode plate may include a negative electrode current collector and a negative electrode active material disposed on at least one surface of the negative electrode current collector.

As an example, the negative electrode current collector is provided with two surfaces opposite to each other in a thickness direction thereof, and the negative electrode active material is disposed on either or both of the two opposite surfaces of the negative electrode current collector.

As an example, the negative electrode active material may be a negative electrode active material known in the art for use in battery cells. As an example, the negative electrode active material may include at least one of the following materials: artificial graphite, natural graphite, soft carbon, hard carbon, a silicon-based material, a tin-based material, lithium titanate, and the like.

In some embodiments, the negative electrode may be a foam metal. The foam metal may be foam nickel, foam copper, foam aluminum, foam alloy, foam carbon, or the like. When the foam metal is used as the negative electrode plate, the surface of the foam metal may not be provided with the negative electrode active material. Certainly, the negative electrode active material may also be provided.

As an example, the negative electrode current collector may also be filled or/and deposited with a lithium source material, a potassium metal, or a sodium metal; the lithium source material is a lithium metal and/or a lithium-rich material.

In some embodiments, the material of the positive electrode current collector may be aluminum, and the material of the negative electrode current collector may be copper.

In some embodiments, the electrode assembly further includes a separator arranged between the positive electrode and the negative electrode.

In some embodiments, the separator is a separation film. The present application does not particularly limit the type of the separation film, and any porous-structure separation film known to have good chemical stability and mechanical stability may be selected and used.

As an example, the main material of the separation film may be selected from at least one of glass fiber, nonwoven fabric, polyethylene, polypropylene, polyvinylidene difluoride, and ceramic.

In some embodiments, the separator is a solid-state electrolyte. The solid-state electrolyte is disposed between the positive electrode and the negative electrode, serving both to transport ions and to isolate the positive electrode and the negative electrode.

In some embodiments, the battery cell further includes an electrolyte that serves to conduct ions between the positive electrode and the negative electrode. The present application has no specific restrictions on the type of the electrolyte, which can be selected according to needs. The electrolyte may be liquid, gel, or solid.

In some embodiments, the electrode assembly is of a wound structure. The positive electrode plate and the negative electrode plate are wound to form a wound structure.

In some embodiments, the electrode assembly is of a stacked structure.

As an example, there may be a plurality of positive electrode plates and a plurality of negative electrode plates, and the plurality of positive electrode plates and the plurality of negative electrode plates are alternately stacked.

As an example, a plurality of positive electrode plates may be provided, and the negative electrode plate is folded to form a plurality of stacked folded segments, with one positive electrode plate disposed between adjacent folded segments.

As an example, the positive electrode plate and the negative electrode plate are both folded to form a plurality of stacked folded segments.

As an example, there may be a plurality of separators, and each separator is arranged between any adjacent positive electrode plates or negative electrode plates separately.

As an example, the separators may be arranged continuously between any adjacent positive electrode plates or negative electrode plates by means of folding or winding.

In some embodiments, the shape of the electrode assembly may be cylindrical, flat, multi-prismatic, or the like.

In some embodiments, the electrode assembly is provided with tabs that can conduct current out from the electrode assembly and include positive electrode tabs and negative electrode tabs.

In some embodiments, the battery cell may include a shell. The shell is configured to encapsulate components such as electrode assemblies and electrolytes.

In one example, the shell includes a housing provided with an opening and an end cover assembly covering the opening of the housing to form an inner cavity with the housing, and the shell may be a steel shell, an aluminum shell, a plastic shell, a composite metal shell, an aluminum-plastic film, or the like.

The end cover assembly includes a top cover and a top cover patch, where the top cover patch is arranged on one side of the top cover distal to the housing. Electrode terminals are installed on the top cover and include a positive electrode terminal and a negative electrode terminal, where the positive electrode tab is connected with the positive electrode terminal, and the negative electrode tab is connected with the negative electrode terminal. The tabs are connected with the electrode terminals through adapting pieces. The adapting piece is configured to prevent the battery from being damaged or other components from being burnt when the electrode assembly is short-circuited or over-charged and over-discharged, such that the safety of battery use can be ensured.

A separation structure is arranged between the electrode assembly and the housing, and a protective film is adhered to the outer side of the shell.

In some embodiments, a pressure relief mechanism is arranged on the shell for relieving the internal pressure of the battery cell. As an example, when the internal pressure or temperature of the battery cell reaches a preset threshold, the pressure relief mechanism is actuated to relieve the internal pressure or temperature. When the internal pressure or temperature of the battery cell reaches a preset threshold, the pressure relief mechanism performs an action or a weak structure arranged in the pressure relief mechanism is broken, thereby forming an opening or a channel through which the internal pressure or temperature may be relieved. The designed thresholds vary depending on different design requirements. The threshold may depend on the material of one or more of the positive electrode plate, the negative electrode plate, the electrolyte, and the separator in the battery cell. As an example, the pressure relief mechanism may be integrally formed with the shell. As an example, the pressure relief mechanism may be provided independently from the shell and connected thereto. The term "actuate" as used herein means that the pressure relief mechanism generates an action or is activated to a certain state, such that the internal pressure and temperature of the battery cell are relieved. The actions generated by the pressure relief mechanism may include, but are not limited to: components in the pressure relief mechanism moving to form an exhaust channel, at least a part of the pressure relief mechanism rupturing, fracturing, being torn or opened, and the like. When the pressure relief mechanism is actuated, high-temperature and high-pressure substances inside the battery cell are discharged outwards from the actuated part as emissions. In this way, the battery cell can be subjected to pressure relief and temperature relief under the condition of controllable pressure or temperature, such that the potential more serious accident is avoided. Emissions from the battery cell referred to in the embodiments of the present application include, but are not limited to: electrolyte, dissolved or split positive and negative electrode plates, fragments of a separator, high-temperature and high-pressure gas generated by reaction, flame, and the like.

The battery described in the embodiments of the present application refers to a single physical module that may include one or a plurality of battery cells to provide a higher voltage and capacity. When there are a plurality of battery cells, the plurality of battery cells are connected in series, in parallel, or in series-parallel by a busbar component.

In some embodiments, the battery may be a battery module, and when there are a plurality of battery cells, the plurality of battery cells are disposed and fixed to form one battery module.

In some embodiments, the battery may be a battery pack. The battery pack includes a case and a battery cell, and the battery cell or the battery module is accommodated in the case.

In some embodiments, the case may be a part of the chassis structure of the vehicle. For example, a part of the case may become at least a part of the floor of the vehicle, or a part of the case may become at least a part of the crossbeam and the longitudinal beam of the vehicle.

In some embodiments, the battery may be an energy storage device. The energy storage device includes an energy storage container, an energy storage electric cabinet, and the like.

In recent years, new energy vehicles have developed by leaps and bounds. In the field of electric vehicles, power batteries, as the power source of electric vehicles, play an irreplaceable and important role. The battery consists of a case and a plurality of battery cells accommodated in the case. Batteries, as core components of new energy vehicles, have high requirements both in terms of safety and service life.

In the related design, in order to achieve air flow circulation on two sides of the separation structure or facilitate positioning and installation of the separation structure, through holes are formed in the separation structure, and the arrangement of through holes forms channels in two sides of the separation structure, such that powder (such as anode powder) on one side of the electrode assembly can move to the other side of the separation structure through the through holes, and the contact of the powder with the shell on the other side of the separation structure is likely to cause short circuit or corrosion of the battery cell. Illustratively, the separation structure includes an insulating film and a bottom support plate, both the insulating film and the bottom support plate are provided with through holes, and the through holes in the insulating film and the bottom support plate are oppositely formed for positioning the insulating film and the bottom support plate and facilitating the connection between the insulating film and the bottom support plate. However, after the connection between the insulating film and the bottom support plate is completed, the through holes in the insulating film communicate with the through holes in the bottom support plate to form channels, such that the powder moves from one side of the electrode assembly to the other side of the separation structure through the channels and is in contact with the shell, which easily leads to short circuit of the battery cell and affects the use stability of the battery cell.

In view of the above, in order to solve the above problems, a battery cell is designed. The battery cell includes a shell, an electrode assembly, a separation structure, and insulating sheets, where the separation structure is located between the electrode assembly and a first wall of the shell, first through holes are formed in the separation structure, and the insulating sheets cover the first through holes. As the first through holes are blocked, the powder on one side of the electrode assembly can move to the other side of the separation structure through the through holes.

The battery cell in the embodiments of the present application can be used in a battery, the battery can be used in an electric device, and the electric device includes, but is not limited to, a mobile phone, a portable device, a laptop, an electric bicycle, an electric vehicle, a ship, a spacecraft, an electric toy, an electric tool, and the like. For example, the spacecraft includes an airplane, a rocket, a space shuttle, a spaceship, and the like. The electric toy includes a stationary or mobile electric toy, such as a game console, an electric vehicle toy, an electric ship toy, or an electric airplane toy. The electric tool includes a metal cutting electric tool, a grinding electric tool, an assembly electric tool, and a railway electric tool, such as an electric drill, an electric grinder, an electric wrench, an electric screwdriver, an electric hammer, an impact drill, a concrete vibrator, or an electric planer. The electric device includes, but is not limited to, a mobile phone, a portable device, a laptop, an electric bicycle, an electric vehicle, a ship, a spacecraft, an electric toy, an electric tool, and the like. For example, the spacecraft includes an airplane, a rocket, a space shuttle, a spaceship, and the like. The electric toy includes a stationary or mobile electric toy, such as a game console, an electric vehicle toy, an electric ship toy, and an electric airplane toy. The electric tool includes a metal cutting electric tool, a grinding electric tool, an assembly electric tool, and a railway electric tool, such as an electric drill, an electric grinder, an electric wrench, an electric screwdriver, an electric hammer, an impact drill, a concrete vibrator, or an electric planer.

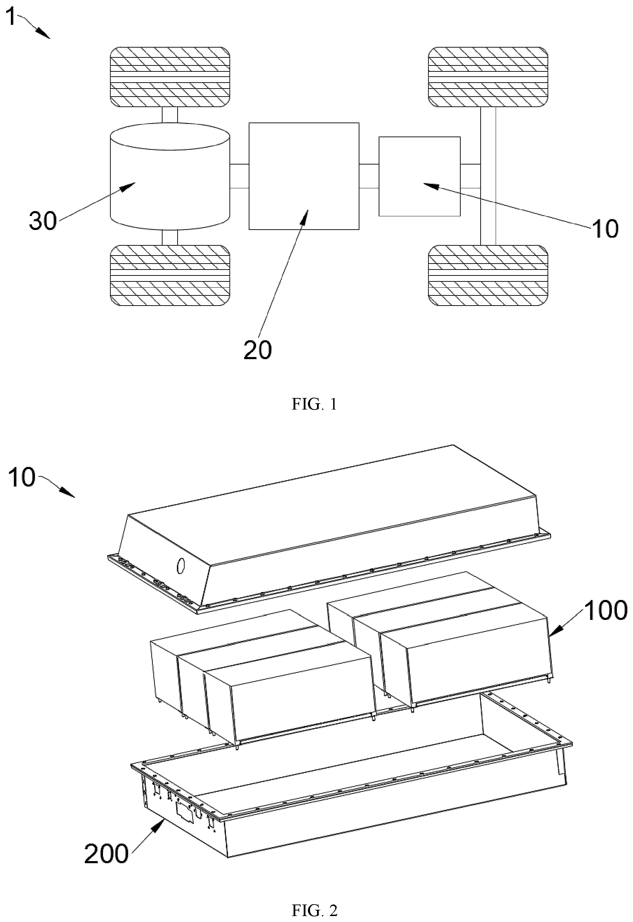

Referring to FIG. 1 and FIG. 2, for convenience of description, in this example, taking the case where an electric device 1 is a vehicle as an example, the vehicle may be a fuel vehicle, a gas vehicle, or a new energy vehicle. The new energy vehicle may be a pure electric vehicle, a hybrid vehicle, or an extended-range vehicle. A driving mechanism 30, a control mechanism 20, and a battery 10 may be arranged inside the vehicle. The driving mechanism 30 may be a motor or the like, and the control mechanism 20 is configured to control the battery 10 to supply power to the driving mechanism 30. For example, the battery 10 may be arranged at the bottom, front, or rear part of the vehicle. The battery 10 may be configured to supply power to other devices of the vehicle. For example, the battery 10 may serve as the operation power source for the vehicle and is used in the circuit system of the vehicle, for example, for operation power needed for starting, navigating, and driving of the vehicle. In another example, the battery 10 may not only serve as the operation power source for the vehicle, but also serve as a driving power source for the vehicle to, instead of or in part instead of fuel or natural gas, provide driving power for the vehicle. In this example, the vehicle uses the battery 10 described above, and by improving the reliability of the battery 10, the reliability of the electric device 1 can be improved.

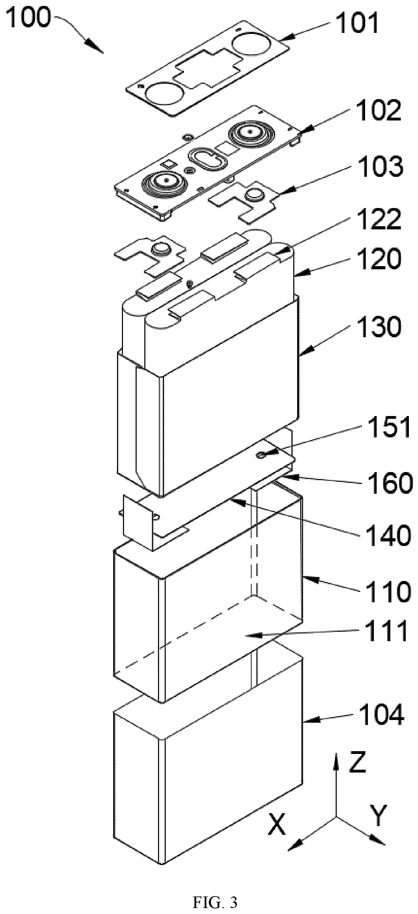

Referring to FIGs. 3 to 8, the embodiments of the present application provide a battery cell 100, which includes a shell 110, an electrode assembly 120, a separation structure 170, and insulating sheets 160, where the shell 110 is provided with an inner cavity, the shell 110 is provided with a first wall 111, the electrode assembly 120 is arranged in the inner cavity, the separation structure 170 is arranged between the first wall 111 and the electrode assembly 120, first through holes 150 are formed in a portion of the separation structure 170 between the first wall 111 and the electrode assembly 120, the insulating sheets 160 include first portions 161, and the first portions 161 cover the first through holes 150.

The shell 110 forms an outer shell structure of the battery cell 100, and the shell 110 is at least partially hollow to form an inner cavity. The shell 110 is provided with a first wall 111, the first wall 111 is one of the wall surfaces of the shell 110, and the first wall 111 may be at least one of a bottom wall, a top wall, or a side wall of the shell 110. The shell 110 may be an aluminum shell or a shell made of other materials.

In some examples, the shell 110 includes a housing provided with an opening and an end cover assembly covering the opening of the housing to form an inner cavity with the housing, a protective film 104 is adhered to the outer side of the housing, and the housing may be a steel shell, an aluminum shell, a plastic shell, a composite metal shell, an aluminum-plastic film, or the like. The first wall 111 may be located on the housing or on the end cover assembly. The electrode assembly 120 is installed in the inner cavity, and the electrode assembly 120 may be of a winding structure or a stacked structure. An electrode assembly 120, the electrode assembly 120 may be placed in the inner cavity through the opening of the housing. The electrode assembly 120 includes tabs 122, and the tabs 122 include positive electrode tabs and negative electrode tabs. The end cover assembly includes a top cover 102 and a top cover patch 101, where the top cover patch 101 is arranged on one side of the top cover 102 distal to the housing. Terminals are installed on the top cover 102 and electrode terminals include a positive electrode terminal and a negative electrode terminal, where the positive electrode tab is connected with the positive electrode terminal, and the negative electrode tab is connected with the negative electrode terminal. The tabs 122 are connected with the electrode terminals through adapting pieces 103. The adapting piece 103 is configured to prevent the battery 10 from being damaged or other components from being burnt when the electrode assembly 120 is short-circuited or over-charged and over-discharged, such that the safety of battery use can be ensured.

The electrode assembly 120 is installed in the inner cavity, and the electrode assembly 120 may be of a winding structure or a stacked structure. The electrode assembly 120 may be placed in the inner cavity of the shell 110 through the opening on the shell 110.

The separation structure 170 is installed in the inner cavity and at least partially located between the first wall 111 and the electrode assembly 120, and the separation structure 170 is configured to create a barrier between the first wall 111 and the electrode assembly 120, such that the electrode assembly 120 cannot be in contact with the first wall 111. The separation structure 170 may be made of an insulating material.

As the separation structure 170 is used as a barrier between the electrode assembly 120 and the first wall 111 of the shell 110, the possibility of the short-circuiting of the electrode assembly 120 can be reduced, thereby helping to improve the reliability of the battery cell 100. Due to the blocking by the separation structure 170, even if the shell 110 is deformed to a certain extent, the separation structure 170 still can isolate the first wall 111 from the electrode assembly 120, thereby avoiding the problems of short-circuiting and the like caused by the contact between the electrode assembly 120 and the first wall 111.

The separation structure 170 may be made of an insulating material.

The separation structure 170 in this example is at least partially located between the first wall 111 and the electrode assembly 120, and the separation structure 170 is provided with first through holes 150, and the first through holes 150 are formed in an area of the separation structure 170 between the first wall 111 and the electrode assembly 120. The first through holes 150 are formed in the separation structure 170 in a penetrating manner. The first through holes 150 may be configured to position the separation structure 170 during the assembly process. For example, the first through holes 150 may be configured to pass a positioning structure therethrough to position the installation position of the separation structure 170 by the positioning structure, so as to facilitate the installation of the separation structure 170; or, when the separation structure 170 includes a plurality of components, the first through holes 150 penetrate through at least two of the components, and the first through holes 150 are configured to pass the positioning structure therethrough to position the at least two components through which the first through holes 150 penetrate in the separation structure 170, so as to facilitate the assembly of the separation structure 170 itself.

In the drawings in the embodiments of the present application, the length direction of the battery cell 100 is shown in an X direction, the width direction is shown in a Y direction, and the height direction is shown in a Z direction. The X direction, the Y direction, and the Z direction are mutually perpendicular to one another; the X direction, the Y direction, and the Z direction are not directed to a single direction or a single position, where a direction parallel to the X direction is called an X direction, a direction parallel to the Y direction is called a Y direction, and a direction parallel to the Z direction is called a Z direction.

Illustratively, the X direction and the Y direction are both parallel to the first wall 111, and the first through holes 150 penetrate through the separation structure 170 along the Z direction.

The first portions 161 of the insulating sheets 160 are configured to cover the first through holes 150 to block the circulation of the two sides of the first through holes 150, such that the probability that the powder on one side of the electrode assembly 120 moves to one side of the first wall 111 through the first through holes 150 can be reduced to a certain extent and even avoided. Illustratively, the first portions 161 may be arranged on one side of the separation structure 170 proximal to the first wall 111 and cover the first through holes 150; the first portions 161 may be arranged on one side of the separation structure 170 proximal to the electrode assembly 120 and cover the first through holes 150; or, the first portions 161 may also at least partially extend into the first through holes 150 to block the first through holes 150, thereby covering the first through holes 150. The first through holes 150 are configured to position and install the separation structure 170, and after the separation structure 170 is positioned, the first portions 161 are covered at the first through holes 150, thus blocking the circulation of the first through holes 150. The first portions 161 covering the first through holes 150 means that the first portions 161 overlap the projection of the first through holes 150, or that the projection of the first through holes 150 is entirely located in the projection of the first portions 161 in a plane parallel to the first wall 111.

In this arrangement, the electrode assembly 120 is located in the shell 110, and the separation structure 170 is located between the first wall 111 of the shell 110 and the electrode assembly 120. As the insulating sheets 160 cover the first through holes 150, the arrangement of the insulating sheets 160 may reduce the probability that the powder on one side of the electrode assembly 120 moves to one side of the first wall 111 through the first through holes 150 to a certain extent, thereby improving the reliability of the battery cell 100.

The insulating sheet 160 may be of a film layer structure, which has a relatively small thickness and occupies a small space. Illustratively, the insulating sheet 160 may have a thickness of 0.01 mm to 0.5 mm. For example, the insulating sheet 160 may have a thickness of 0.01 mm, 0.02 mm, 0.03 mm, 0.04 mm, 0.05 mm, 0.1 mm, 0.12 mm, 0.15 mm, 0.18 mm, 0.2 mm, 0.25 mm, 0.3 mm, 0.35 mm, 0.4 mm, 0.42 mm, 0.48 mm, 0.5 mm, or the like. The thickness of the insulating sheet 160 is a vertical distance between one side of the insulating sheet 160 facing the separation structure 170 and the opposite side. The thickness of the first portion 161 between the first wall 111 and the separation structure 170 is the dimension of the first portion 161 in the Z direction. In this dimension range, the insulating sheet 160 has sufficient structural strength to block the passage of powder or liquid so as to cover the first through holes 150, and in this dimension range, the insulating sheet 160 has a relatively small thickness, occupies a small space, and has a light weight.

In one possible design, the separation structure 170 is provided with a plurality of first through holes 150, and the insulating sheets 160 cover all of the first through holes 150.

To achieve more stable positioning, a plurality of first through holes 150 are formed in the separation structure 170, the plurality of first through holes 150 are all formed in an area of the separation structure 170 between the first wall 111 and the electrode assembly 120, and the plurality of first through holes 150 are formed at intervals. The plurality of first through holes 150 can enable a plurality of positioning structures to pass through so as to position the separation structure 170 through the plurality of positioning structures, thereby providing a better positioning effect and higher stability. After the positioning is completed, the insulating sheets 160 cover all of the first through holes 150, such that all of the first through holes 150 are blocked by the insulating sheets 160 after the assembly of the battery cell 100 is completed, and thus any one of the first through holes 150 is blocked, so as to prevent the powder from moving to the other side of the separation structure 170 through one or a plurality of first through holes 150. In this arrangement, as the insulating sheets 160 cover all of the first through holes 150, the probability that the powder on one side of the electrode assembly 120 moves to one side of the first wall 111 through the first through holes 150 is reduced under the condition that a plurality of first through holes 150 are provided.

In an optional embodiment, the number of the insulating sheets 160 is equal to the number of the first through holes 150, the insulating sheets 160 are arranged in one-to-one correspondence with the first through holes 150, and the insulating sheets 160 cover the corresponding first through holes 150; or one insulating sheet 160 is provided, and the one insulating sheet 160 covers all of the first through holes 150.

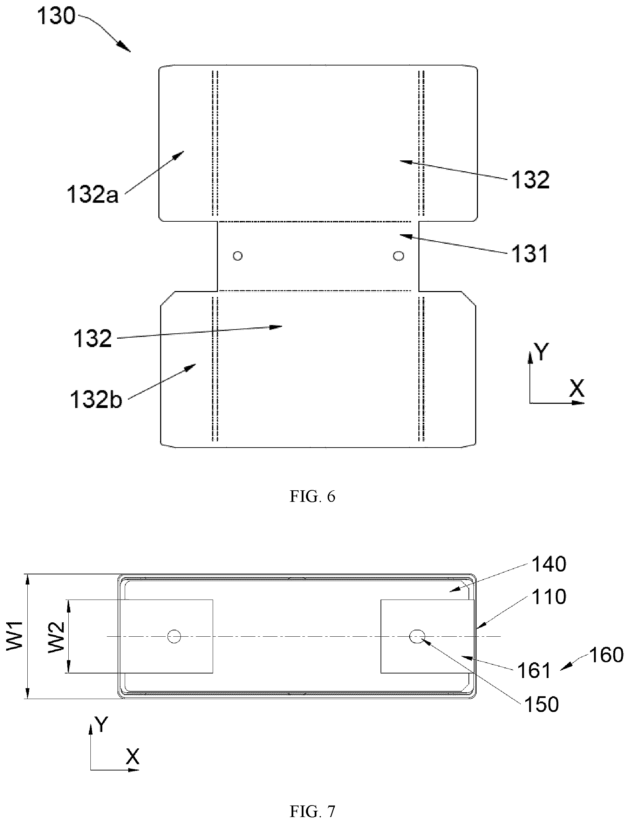

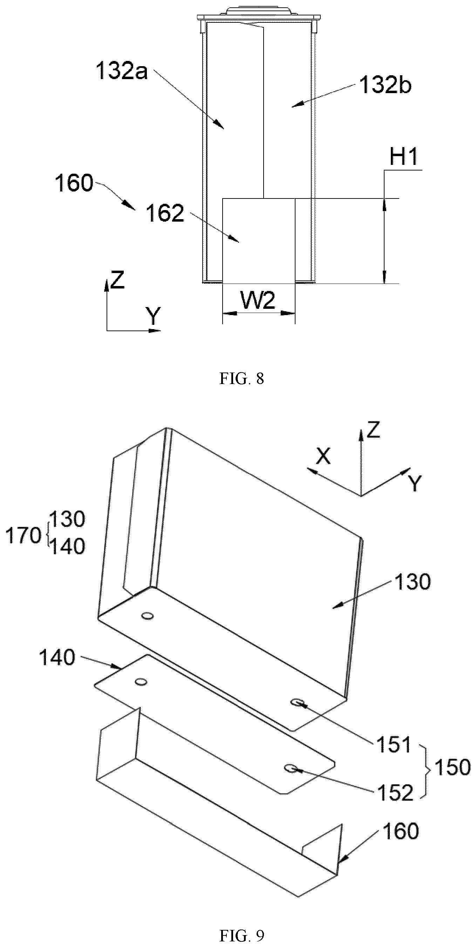

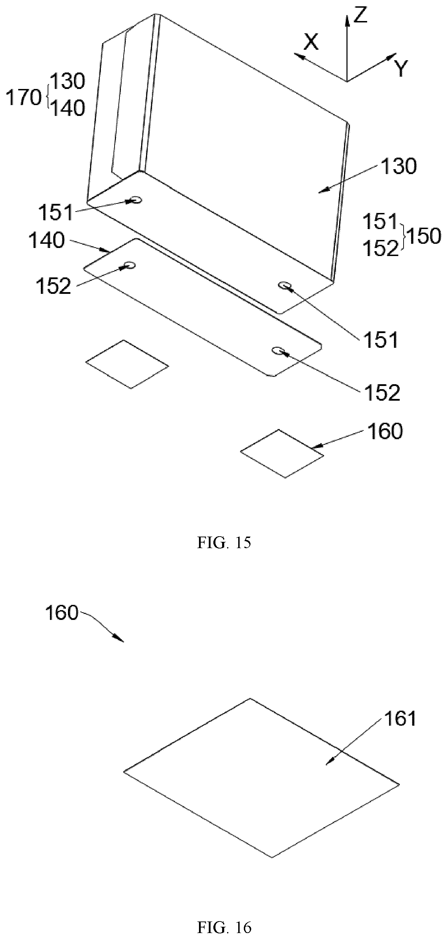

That is, under the condition that a plurality of first through holes 150 are provided, one or a plurality of insulating sheets 160 may be provided. As shown in FIGs. 9 to 14, when one insulating sheet 160 is provided, the insulating sheet 160 can block all of the first through holes 150. As shown in FIGs. 7 and 8, and 15 to 17, when a plurality of insulating sheets 160 are provided, one insulating sheet 160 may be configured to block one or several first through holes 150.

Illustratively, when four first through holes 150 are provided, one, two, three, or four insulating sheets 160 may be provided, and when one insulating sheet 160 is provided, the insulating sheet 160 blocks the four first through holes 150. When two insulating sheets 160 are provided, one of the insulating sheets 160 may block one of the first through holes 150, and the other insulating sheet 160 may block the other three first through holes 150; or, of the two insulating sheets 160, each insulating sheet 160 may block two of the first through holes 150. When three insulating sheets 160 are provided, one of the insulating sheets 160 blocks two of the first through holes 150, and the other two insulating sheets 160 block the other two first through holes 150, respectively. When four insulating sheets 160 are provided, each insulating sheet 160 correspondingly blocks one first through hole 150.

As shown in FIGs. 7 and 8, in an optional embodiment, the number of the insulating sheets 160 is equal to the number of the first through holes 150, the insulating sheets 160 are arranged in one-to-one correspondence with the first through holes 150, and the insulating sheets 160 cover the corresponding first through holes 150. Illustratively, when two first through holes 150 are provided, two insulating sheets 160 are provided, a first portion 161 of one of the insulating sheets 160 covers one of the first through holes 150, and a first portion 161 of the other insulating sheet 160 covers the other first through hole 150. In this arrangement, as one insulating sheet 160 only needs to block one first through hole 150, the dimension of the insulating sheet 160 is relatively small, thus reducing the occupied space of the insulating sheet 160.

The insulating sheet 160 may be made of an insulating tape (e.g., insulating blue tape), an insulating film 130 (e.g., insulating blue film), or other materials capable of providing an insulating effect.

In one possible design, the first portion 161 may be connected to the separation structure 170 by thermal fusion and cover the first through hole 150.

Or, in another possible design, the first portion 161 is adhered to an opening of the first through hole 150.

As the first through holes 150 penetrate through the separation structure 170, the first through hole 150 is provided with two openings, one of which is adjacent to the first wall 111 and the other of which is adjacent to the electrode assembly 120. The first portion 161 of the insulating sheet 160 may be adhered to the opening of the first through hole 150 adjacent to the first wall 111, or may be adhered to the opening of the first through hole 150 adjacent to the electrode assembly 120.

In this arrangement, the first portions 161 are fixed to the separation structure 170 by adhering, and cover the first through holes 150, and the adhering mode facilitates fixing the first portions 161 and makes the connection between the first portions 161 and the separation structure 170 more tightly, thus providing a better blocking effect.

The first portion 161 may be provided with a glue layer. For example, the insulating sheet 160 is an insulating tape, one side of which is a glue-free surface, and the other side of which is a glue-containing surface, the side of the insulating sheet 160 with the glue-containing surface is adhered to the separation structure 170, and the first portion 161 of the insulating sheet 160 covers the first through hole 150. Or, the first portion 161 may not be provided with a glue layer, but may be adhered to the separation structure 170 through glue.

The insulating sheet 160 may be located on one side of the separation structure 170 distal to the first wall 111 and proximal to the electrode assembly 120, or on one side of the separation structure 170 facing the first wall 111 and distal to the electrode assembly 120. In some examples, the first portion 161 is located on one side of the separation structure 170 facing the first wall 111. In this arrangement, during assembly, the electrode assembly 120 may be connected to the separation structure 170, and then the first portion 161 covers the separation structure 170 and the first portion 161 is arranged on one side of the separation structure 170 facing the first wall 111, so as to facilitate the operation of connecting the first portion 161 to the separation structure 170 after the separation structure 170 is connected to the electrode assembly 120. As the first portion 161 is arranged on one side of the separation structure 170 facing the first wall 111, when the first portion 161 is fixedly connected to the separation structure 170, an operation space is larger, and an operation is facilitated.

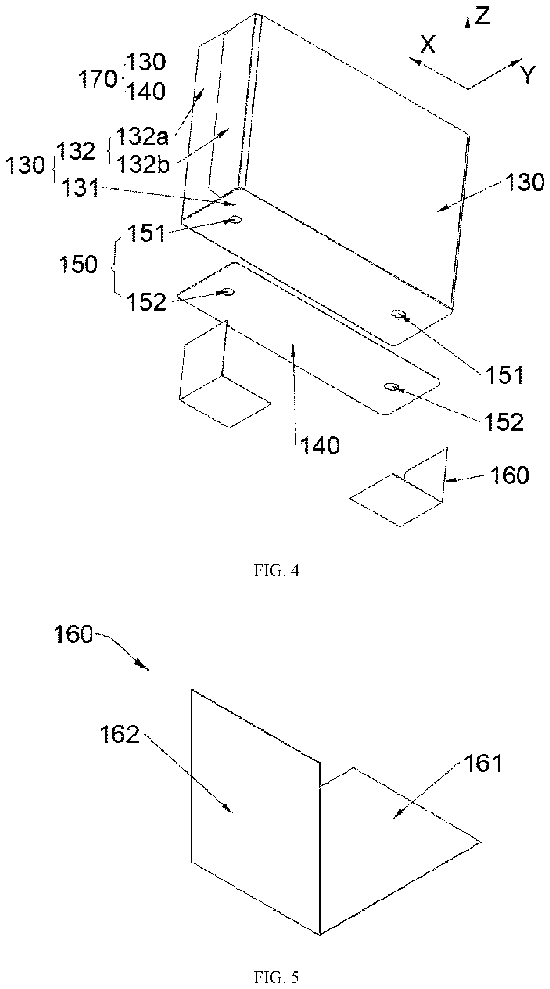

In one possible design, as shown in FIGs. 4, 9, 12 and 15, the separation structure 170 includes a baffle 140 and an insulating film 130, the baffle 140 is located between the electrode assembly 120 and the first wall 111, the insulating film 130 is at least partially located between the electrode assembly 120 and the first wall 111, the first through hole 150 includes a first hole segment 151 and a second hole segment 152 which are oppositely arranged and communicate, the first hole segment 151 is arranged on the insulating film 130, the second hole segment 152 is arranged on the baffle 140, and the first portion 161 covers an opening on one side of the first hole segment 151 distal to the second hole segment 152 or an opening on one side of the second hole segment 152 distal to the first hole segment 151.

The insulating film 130 wraps the outer side of the electrode assembly 120, the insulating film 130 is at least partially located between the electrode assembly 120 and the first wall 111, and the baffle 140 is located between the electrode assembly 120 and the first wall 111. The baffle 140 may be arranged between the insulating film 130 and the electrode assembly 120, and the baffle 140 may also be arranged between the insulating film 130 and the first wall 111.

The first through hole 150 includes a first hole segment 151 and a second hole segment 152, the first hole segment 151 and the second hole segment 152 are oppositely arranged and communicate, the first hole segment 151 is arranged on the insulating film 130, the first hole segment 151 penetrates through the insulating film 130, the second hole segment 152 is arranged on the baffle 140, and the second hole segment 152 penetrates through the baffle 140. The cross-sectional shape of the first hole segment 151 may be the same as or different from that of the second hole segment 152, and the first hole segment 151 and the second hole segment 152 may be circular holes, elliptical holes, runway holes, polygonal holes, or the like. The cross-sectional shape of the first hole segment 151 and the cross-sectional shape of the second hole segment 152 are both shapes in cross-section parallel to the first wall 111.

In this arrangement, as the insulating film 130 is provided with the first hole segments 151, and the baffle 140 is provided with the second hole segments 152, the insulating film 130 and the baffle 140 can be positioned by the first hole segments 151 and the second hole segments 152. In the process of positioning the insulating film 130 and the baffle 140, the positioning structure is firstly disposed to pass through the first hole segments 151 and then extend into the second hole segments 152, or the positioning structure is firstly disposed to pass through the second hole segments 152 and then extend into the first hole segments 151. The relative spacing between the positioning structure and the insulating film 130 is achieved through the cooperation between the positioning structure and the first hole segments 151, and the relative spacing between the positioning structure and the baffle 140 is achieved through the cooperation between the positioning structure and the second hole segments 152. As the same positioning structure sequentially penetrates through the first hole segments 151 and the second hole segments 152, the insulating film 130 and the baffle 140 are relatively positioned by the positioning structure. The first portion 161 covers one side of the first hole segment 151 distal to the second hole segment 152, or the first portion 161 covers one side of the second hole segment 152 distal to the first hole segment 151, and as the first hole segment 151 communicates with the second hole segment 152, the communication of the first through hole 150 can be blocked by the first portion 161 by covering either of the first hole segment 151 and the second hole segment 152. As the first through holes 150 are configured to position and install the insulating film 130 and the baffle 140, it is unnecessary to use the first through holes 150 after the insulating film 130 is connected to the baffle 140, and thus the connection of the first portion 161 is performed after the insulating film 130 is connected to the baffle 140, and then the first portion 161 covers the first hole segment 151 or the second hole segment 152, so as to cover the first through holes 150.

In one possible arrangement, as shown in FIGs. 3, 4 and 6, the insulating film 130 includes a first film layer 131 and a second film layer 132, where the first film layer 131 is located between the electrode assembly 120 and the first wall 111, the second film layer 132 at least partially wraps the circumferential side surface of the electrode assembly 120, and the first film layer 131 and the second film layer 132 may be of an independent structure and then joined together, or may be of an integral structure. When the first film layer 131 and the second film layer 132 are of an independent structure, the second film layer 132 may be of an integral structure or a split-type structure, and when the second film layer 132 is of a split-type structure, the second film layer 132 includes a plurality of sub-film layers, different sub-film layers separately wrap the outer sides of different side surfaces of the electrode assembly 120, and edges of adjacent sub-film layers are connected.

Illustratively, the insulating film 130 is a whole film layer, that is, the first film layer 131 and the second film layer 132 are of an integral structure, and wrap a plurality of side surfaces of the electrode assembly 120 after being folded, a portion between the electrode assembly 120 and the first wall 111 is the first film layer 131, and a portion surrounding and wrapping the outer periphery of the electrode assembly 120 is the second film layer 132.

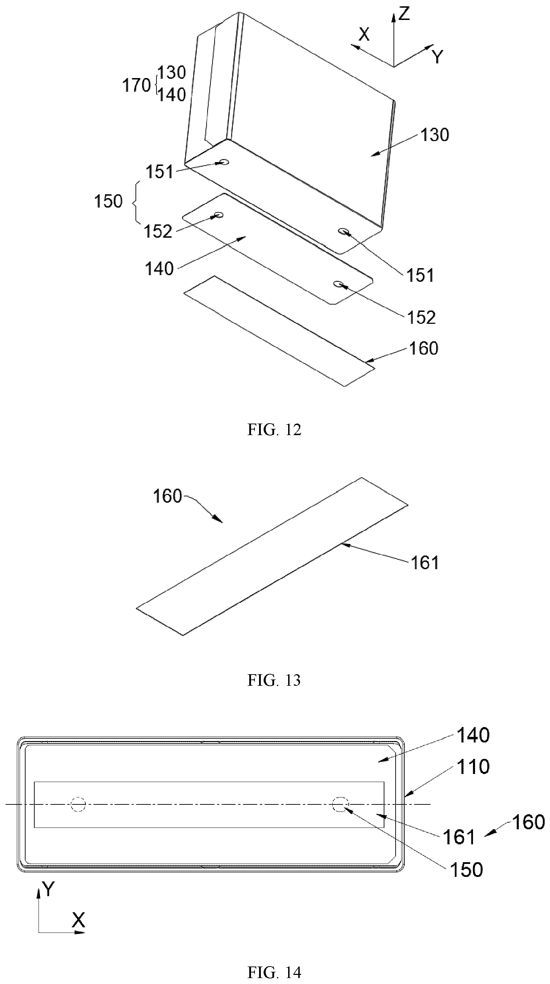

As shown in FIGs. 12 to 17, in one possible design, the insulating sheet 160 includes only a first portion 161.

Or, in another possible design, the insulating film 130 is folded to wrap the electrode assembly 120 and forms first folded edges 132a and second folded edges 132b overlapping each other or connected to each other on the side edges of the electrode assembly 120, the insulating sheets 160 include second portions 162, the second portions 162 fix the first folded edges 132a and the second folded edges 132b, and the first portions 161 are connected to the second portions 162.

Illustratively, as shown in FIG. 6, the dotted lines in FIG. 6 are folding marks, the insulating film 130 is a whole film layer, the second film layer 132 is divided into two parts, which are respectively referred to as a first sub-film layer and a second sub-film layer, where the first sub-film layer and the second sub-film layer are located on two opposite sides of the first film layer 131, respectively; in the X direction, the first folded edges 132a are arranged on two sides of the first sub-film layer, the second folded edges 132b are arranged on two sides of the second sub-film layer, the first folded edges 132a and the second folded edges 132b are arranged in one-to-one correspondence, and after being folded, one of the first folded edges 132a and one of the second folded edges 132b partially overlap each other, and the second portion 162 fixes the first folded edge 132a and the second folded edge 132b. The other first folded edge 132a and the other second folded edge 132b partially overlap each other, and the second portion 162 fixes the first folded edge 132a and the second folded edge 132b.

In this arrangement, the insulating sheet 160 can not only cover the first through holes 150, but also fix the first folded edge 132a and the second folded edge 132b. As the insulating sheet 160 includes the first portion 161 and the second portion 162 that are connected to each other, the area of contact between the insulating sheet 160 and the separation structure 170 increases, thus improving the connection stability between the insulating sheet 160 and the separation structure 170.

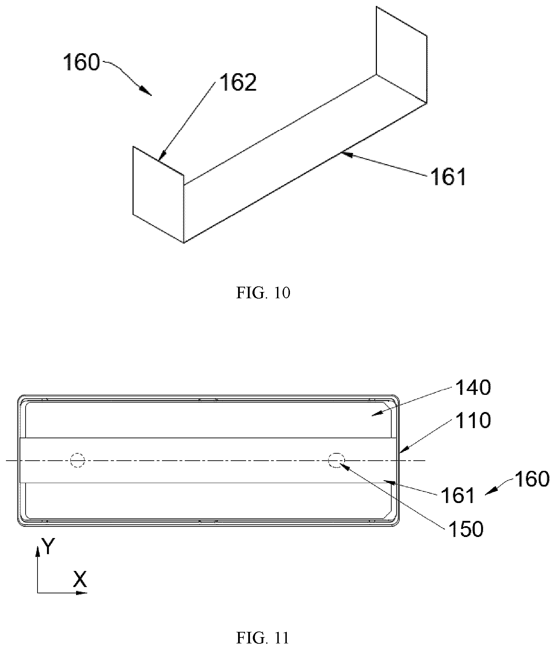

When a plurality of first folded edges 132a and a plurality of second folded edges 132b are provided, one or a plurality of insulating sheets 160 may be provided, and when one insulating sheet 160 is provided, one first portion 161 is provided, the number of the second portions 162 is the same as the number of the first folded edges 132a, and each of the second portions 162 is connected to the same first portion 161. Illustratively, two first folded edges 132a and two second folded edges 132b are provided, as shown in FIGs. 9 and 10, one insulating sheet 160 is provided, one first portion 161 is provided, two second portions 162 are provided, and the two second portions 162 are respectively configured to fix a corresponding set of the first folded edge 132a and the second folded edge 132b.

When the number of the insulating sheets 160 is plural and less than the number of the first folded edges 132a, an insulating sheet 160 includes a first portion 161 and a plurality of second portions 162, the number of the second portions 162 is less than the number of the first folded edges 132a, and the number of the second portions 162 of the plurality of insulating sheets 160 is equal to the number of the first folded edges 132a. The number of the second folded edges 132b of different insulating sheets 160 may be the same or different. For example, when four first folded edges 132a are provided, four second folded edges 132b are provided, and when two insulating sheets 160 are provided, one of the insulating sheets 160 may include a first portion 161 and three second portions 162, the other insulating sheet 160 may include a first portion 161 and a second portion 162, or both of the insulating sheets 160 may include a first portion 161 and two second portions 162.

When the number of the insulating sheets 160 is the same as the number of the first folded edges 132a, the insulating sheet 160 includes a first portion 161 and a second portion 162. Illustratively, as shown in FIGs. 4 and 5, two first folded edges 132a are provided, two insulating sheets 160 are provided, and each of the insulating sheets 160 includes a first portion 161 and a second portion 162, one of the second portions 162 fixes one of the first folded edges 132a and one of the second folded edges 132b, and the other second portion 162 fixes the other first folded edge 132a and the other second folded edge 132b.

The second portion 162 may be adhered to the insulating film 130 to fix the first folded edge 132a and the second folded edge 132b, that is, the second portion 162 is connected to the first folded edge 132a and the second folded edge 132b by gluing. The first folded edge 132a and the second folded edge 132b partially overlap each other, and the second portion 162 is partially adhered to the first folded edge 132a and partially adhered to the second folded edge 132b, thereby fixing the first folded edge 132a and the second folded edge 132b. As the first folded edge 132a and the second folded edge 132b partially overlap each other, the wrapping effect of the first folded edge 132a and the second folded edge 132b on the electrode assembly 120 may be improved.

In one possible design, in the first direction, the second portion 162 is spaced apart from at least one of two edges of the separation structure 170 spaced apart in the first direction, and the first direction is parallel to the width direction of the first wall 111. The first direction is the Y direction. The second portion 162 is spaced apart from at least one edge of the separation structure 170, and in the first direction, one side surface of the separation structure 170 is provided with two opposite edges, and the second portion 162 may be spaced apart from one of the edges, or the second portion 162 may be spaced apart from both edges of the separation structure 170.

In this arrangement, as the second portion 162 is spaced apart from at least one edge of the separation structure 170, that is, in the first direction, the dimension of the second portion 162 is smaller than that of the separation structure 170, the second portion 162 can be smoothly adhered to the insulating film 130, thus reducing the occupied space of the second portion 162.

In one possible design, in the first direction, the second portion 162 is equidistant from two side edges of the separation structure 170. That is, in a side surface of the separation structure 170, the second portion 162 is centrally arranged, and the second portion 162 may better fix both the first folded edge 132a and the second folded edge 132b under the condition that the joint of the first folded edge 132a and the second folded edge 132b is located in a non-edge area of the electrode assembly 120. In this arrangement, the second portion 162 is adhered to the middle area of the insulating film 130, facilitating the fixing of the first folded edge 132a and the second folded edge 132b. Meanwhile, as the second portion 162 is arranged in the middle area of one side of the separation structure 170, both side edges of the second portion 162 are attached to the side surface of the separation structure 170, which is convenient for improving the attaching flatness of the second portion 162.

In some embodiments, the first portion 161 and the second portion 162 are equal in width, that is, the dimension of the first portion 161 is equal to that of the second portion 162 in the first direction. Illustratively, the insulating sheet 160 is of a rectangular strip structure, which is adhered to the first folded edge 132a and the second folded edge 132b on one side of the separation structure 170, and then is adhered to one side of the separation structure 170 facing the first wall 111 after being bent, and covers the first through hole 150. The portion that is adhered to the first folded edge 132a and the second folded edge 132b is the second portion 162, and the portion that is adhered to the first wall 111 facing the separation structure 170 is the first portion 161.

In some embodiments, as shown in FIGs. 7 and 8, in the first direction, the width of the shell 110 is W1, and the width of the second portion 162 is W2, where 0.1 ≤ W2/W1 ≤ 0.9. The width of the shell 110 is the dimension of the shell 110 in the first direction, and the width of the second portion 162 is the dimension of the second portion 162 in the first direction. That is, the width of the second portion 162 is at least 0.1 times the width of the shell 110, and the width of the second portion 162 is at most 0.9 times the width of the shell 110. From the above, the width setting range of the second portion 162 is related to the width of the shell 110. In this arrangement, the width of the second portion 162 may be set according to the width of the shell 110, and as the width of the second portion 162 is 0.1 times or more the width of the shell 110, the width of the second portion 162 is sufficient to fix the first folded edge 132a and the second folded edge 132b. As the width of the second portion 162 is 0.9 times or less the width of the shell 110, the second portion 162 may be completely laid on the side surface of the separation structure 170, resulting in high flatness and small occupied space. Illustratively, the width of the second portion 162 may be 0.1 times, 0.2 times, 0.3 times, 0.4 times, 0.5 times, 0.6 times, 0.7 times, 0.8 times, 0.9 times, etc. the width of the shell 110. Illustratively, when the width of the shell 110 is 100 mm, the width of the second portion 162 ranges from 10 mm to 90 mm, e.g., 10 mm, 15 mm, 20 mm, 25 mm, 35 mm, 40 mm, 48 mm, 50 mm, 60 mm, 70 mm, 78 mm, 80 mm, or 90 mm.

In some embodiments, 0.25 ≤ W2/W1 ≤ 0.75. That is, the width of the second portion 162 is at least 0.25 times the width of the shell 110, such that the area of contact with the first folded edge 132a and the second folded edge 132b can be increased, thereby improving the fixing effect on the first folded edge 132a and the second folded edge 132b; the width of the second portion 162 is at most 0.75 times the width of the shell 110, such that the width of the second portion 162 occupies a small space on the basis of satisfying the requirement of fixing the first folding edge 132a and the second folding edge 132b. Illustratively, the width of the second portion 162 may be 0.1 times, 0.2 times, 0.3 times, 0.4 times, 0.5 times, 0.6 times, 0.7 times, 0.8 times, 0.9 times, etc. the width of the shell 110. Illustratively, when the width of the shell 110 is 100 mm, the width of the second portion 162 ranges from 25 mm to 75 mm, e.g., 25 mm, 28 mm, 30 mm, 37 mm, 42 mm, 47 mm, 52 mm, 55 mm, 65 mm, 72 mm, or 75 mm.

In some embodiments, as shown in FIG. 8, the second portion 162 has a dimension of 10 mm to 80 mm in a height direction of the electrode assembly 120. That is, in the Z direction, the second portion 162 has a dimension of 10 mm to 80 mm, and illustratively, the second portion 162 may be 10 mm, 20 mm, 25 mm, 30 mm, 35 mm, 40 mm, 45 mm, 55 mm, 60 mm, 65 mm, 70 mm, 75 mm, 80 mm, or the like. In this arrangement, the height of the second portion 162 may be set to satisfy the requirement of fixing the first folded edge 132a and the second folded edge 132b.

In some embodiments, the second portion 162 has a dimension of 15 mm to 50 mm in a height direction of the electrode assembly 120. That is, in the Z direction, the second portion 162 has a dimension of 15 mm to 50 mm. Illustratively, the second portion 162 may be 15 mm, 17 mm, 22 mm, 27 mm, 32 mm, 38 mm, 42 mm, 48 mm, 50 mm, or the like. In this arrangement, the area of contact between the second portion 162 and the first folded edge 132a and the second folded edge 132b is relatively larger, the fixing effect on the first folded edge 132a and the second folded edge 132b is relatively better, and meanwhile, the space occupied by the second portion 162 on the side surface of the separation structure 170 is relatively small on the basis of satisfying the requirement of fixing the first folded edge 132a and the second folded edge 132b.

In some embodiments, the separation structure 170 includes a baffle 140 and an insulating film 130, the baffle 140 is located between the electrode assembly 120 and the first wall 111, the insulating film 130 is at least partially located between the electrode assembly 120 and the first wall 111, the first through hole 150 includes a first hole segment 151 and a second hole segment 152 which are oppositely arranged and communicate, the first hole segment 151 is arranged on the insulating film 130, and the second hole segment 152 is arranged on the baffle 140. Illustratively, when two first through holes 150 are provided, two first hole segments 151 are provided, and two second hole segments 152 are provided; the two first hole segments and the two second hole segments are arranged in one-to-one correspondence and communicate with each other, and the first portion 161 covers an opening on one side of the first hole segment 151 distal to the second hole segment 152 or an opening on one side of the second hole segment 152 distal to the first hole segment 151.

In a specific embodiment, the baffle 140 is only provided with two holes, and the two holes in the baffle 140 are the first hole segments 151; the insulating film 130 is only provided with two holes, the two holes in the insulating film 130 are the second hole segments 152. That is, there are two and only two holes in the baffle 140, which are both the first hole segments 151, and there are no other holes formed in the baffle 140 to penetrate through the baffle 140 except for the first hole segments 151. There are two and only two holes in the insulating film 130, which are both the second hole segments 152, and there are no other holes formed in the insulating film 130 to penetrate through the insulating film 130 except for the second hole segments 152. The first hole segment 151 and the second hole segment 152 may be configured to position the baffle 140 and the insulating film 130, and the two first hole segments 151 and the two second hole segments 152 may provide better positioning accuracy. After the positioning of the baffle 140 and the insulating film 130 is completed, at least one of the first hole segment 151 and the second hole segment 152 is covered with the first portion 161, that is, the first through hole 150 formed by the communication of the first hole segment 151 and the second hole segment 152 is covered, and the first portion 161 entirely covers the holes of the baffle 140 and the insulating film 130, thereby allowing the baffle and the insulating sheet to have a better blocking effect against the powder on one side of the electrode assembly.

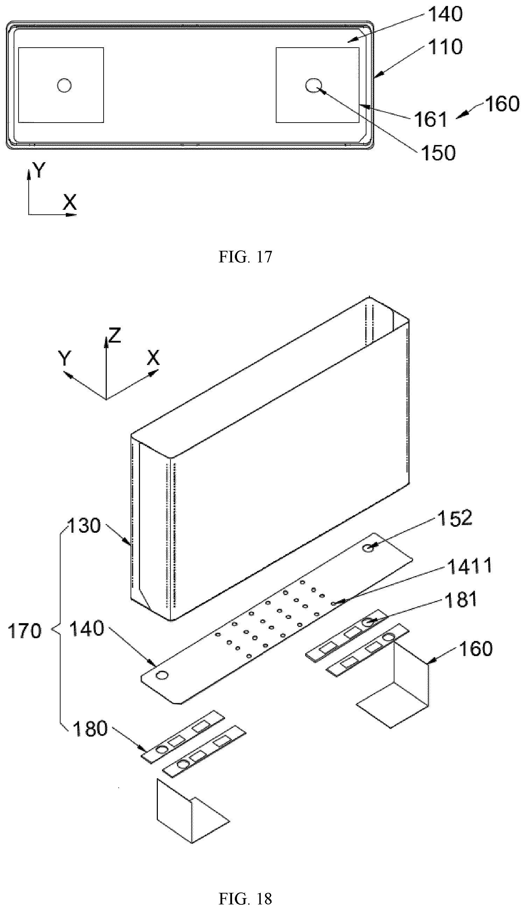

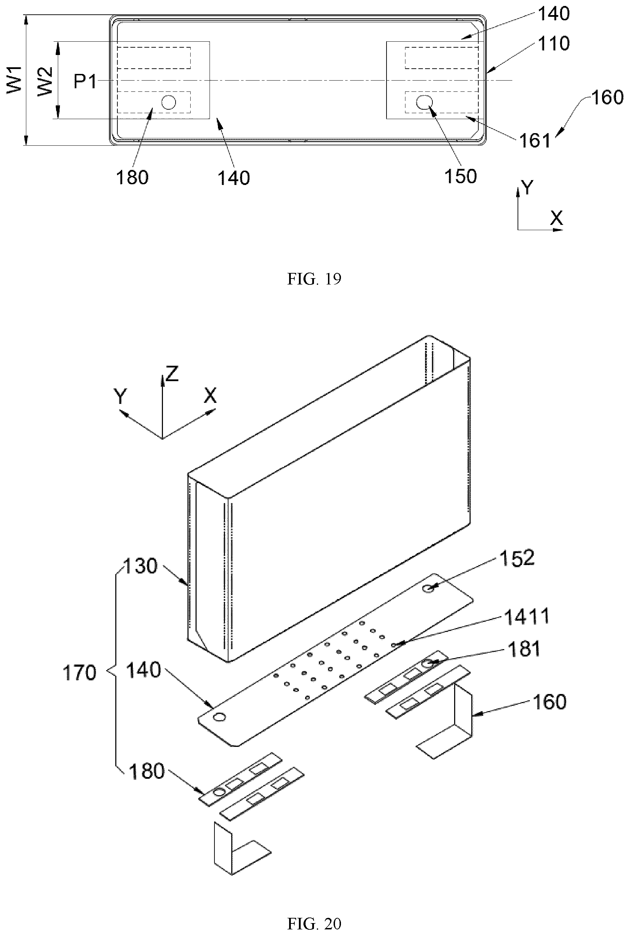

As shown in FIGs. 18 and 19, in one possible design, the separation structure 170 further includes support blocks 180, the baffle 140 is arranged between the insulating film 130 and the first wall 111, and the support blocks 180 are arranged on one side of the baffle 140 facing the first wall 111; in one arrangement, the support blocks 180 are arranged in an area of the baffle 140 where no first through hole 150 is formed; in another arrangement, the support blocks 180 are provided with second through holes 181, the second through hole 181 of at least one of the support blocks 180 and the first through hole 150 are oppositely formed, and the first portion 161 covers the second through hole 181.

One or a plurality of support blocks 180 are provided, when one support block 180 is provided, the support block 180 may be arranged in an area of the baffle 140 where the first through hole 150 is formed, or may be arranged in an area of the baffle 140 where no first through hole 150 is formed, and when the support block 180 is arranged in an area of the baffle 140 where the first through hole 150 is formed, the support block 180 is provided with a second through hole 181 communicating with the first through hole 150. When the support block 180 is arranged in an area of the baffle 140 where no first through hole 150 is formed, a second through hole 181 may be formed or no second through hole 181 may be formed on the support block 180. When a plurality of support blocks 180 are provided, all of the support blocks 180 may be arranged in an area of the baffle 140 where the first through holes 150 are formed, or may be arranged in an area of the baffle 140 where no first through hole 150 is formed; or, the plurality of support blocks 180 may be partially arranged in an area of the baffle 140 where the first through holes 150 are formed, and the plurality of support blocks 180 may be partially arranged in an area of the baffle 140 where no first through hole 150 is formed. When all of the support blocks 180 are arranged in the area where the first through holes 150 are formed, the second through holes 181 are formed on all of the support blocks 180, the second through holes 181 are in one-to-one correspondence with the first through holes 150, and the first portions 161 cover all of the second through holes 181. When the support blocks 180 are only partially arranged in the area of the baffle 140 where the first through holes 150 are formed, the support blocks 180 covering the first through holes 150 are provided with second through holes 181 to allow the second through holes 181 to communicate with the first through holes 150, and other support blocks 180 which are not arranged at the first through holes 150 may be provided with the second through holes 181 or may not be provided with the second through holes 181. When all of the support blocks 180 are arranged in the area of the baffle 140 where no first through hole 150 is formed, the support blocks 180 may not be provided with the second through holes 181 or may be provided with the second through holes 181.

In a possible arrangement, two first through holes 150 are spaced apart in the baffle 140, and four support blocks 180 are arranged. Among the four support blocks 180, two support blocks 180 are arranged at the two first through holes 150, respectively, and the other two support blocks 180 are arranged in an area where no first through hole 150 is formed; all of the four support blocks 180 are provided with second through holes 181, and the second through holes 181 in the support blocks 180 that are formed opposite to the first through holes 150 and the corresponding first through holes 150 are oppositely formed and communicate. As all of the four support blocks 180 are provided with the second through holes 181, the four support blocks 180 can adopt the same structure, thus facilitating the production and manufacturing.

As the separation structure 170 is provided with support blocks 180, the support blocks 180 can enhance the structural strength of the separation structure 170. When the support blocks 180 are arranged in the area where no first through hole 150 is formed, the first portions 161 cover the first through holes 150, and when the support blocks 180 are arranged in the area opposite to the first through holes 150, as the support blocks 180 are provided with the second through holes 181, and the second through holes 181 are opposite to the first through holes 150, the first portions 161 can cover the first through holes 150 by the first portions 161 covering the second through holes 181, thereby reducing the probability that the powder on one side of the electrode assembly 120 moves to one side of the first wall 111 through the first through holes 150.

In some examples, the support blocks 180 may be connected to the baffle 140 by thermal fusion, and the baffle 140 may be connected to the insulating film 130 by thermal fusion.

As shown in FIGs. 18 and 19, in some examples, two first through holes 150 are formed in the baffle 140, the center line of the baffle 140 in the width direction is P1, and both the first through holes 150 are formed in an area proximal to one side edge of the baffle 140 in the width direction, that is, the two first through holes 150 are located on the same side of P1. Four support blocks 180 are provided, two of the support blocks 180 are provided with second through holes 181, the two support blocks 180 are arranged at positions opposite to the first through holes 150, and the second through holes 181 in the support blocks 180 communicate with the first through holes 150. The other two support blocks 180 are not provided with the second through holes 181, and the other two support blocks 180 are arranged in an area where no first through hole 150 is formed. Two insulating sheets 160 are provided, a first portion 161 of one of the insulating sheets 160 is adhered to the surfaces of two support blocks 180 that are located on one side of the baffle 140 in the length direction distal to the baffle 140, and the first portion 161 covers the second through hole 181 of one of the support blocks 180. A first portion 161 of the other insulating sheet 160 is adhered to the surfaces of two support blocks 180 that are located on the other side of the baffle 140 in the length direction distal to the baffle 140, and the first portion 161 covers the second through hole 181 of one of the support blocks 180.

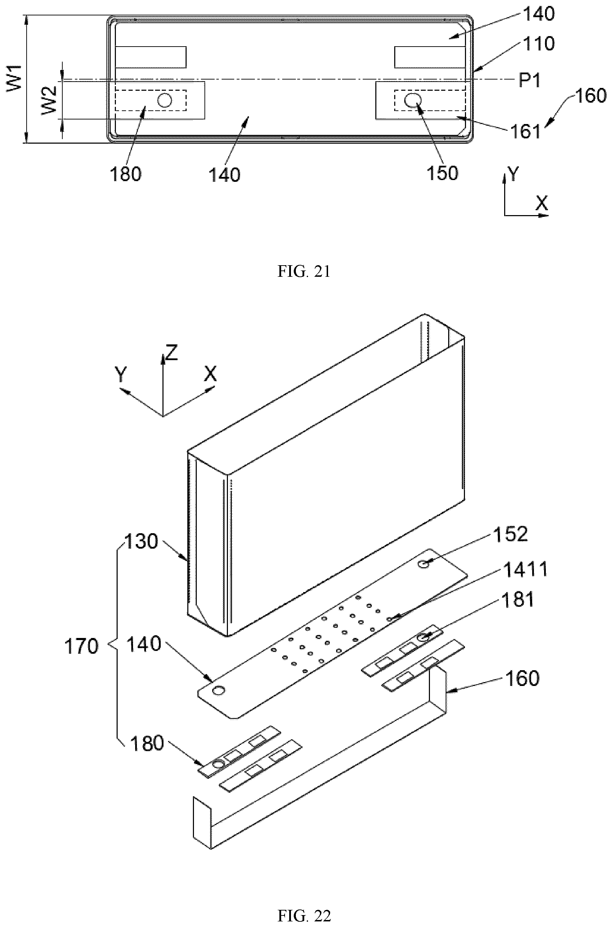

As shown in FIGs. 20 and 21, in some examples, two first through holes 150 are formed in the baffle 140, the center line of the baffle 140 in the width direction is P1, and both the first through holes 150 are formed in an area proximal to one side edge of the baffle 140 in the width direction, that is, the two first through holes 150 are located on the same side of P1. Four support blocks 180 are provided, two of the support blocks 180 are provided with second through holes 181, the two support blocks 180 are arranged at positions opposite to the first through holes 150, and the second through holes 181 in the support blocks 180 communicate with the first through holes 150. The other two support blocks 180 are not provided with the second through holes 181, and the other two support blocks 180 are arranged in an area where no first through hole 150 is formed. Two insulating sheets 160 are provided, a first portion 161 of one of the insulating sheets 160 is adhered to the surface of the support block 180 that is located on one side of the baffle 140 in the length direction distal to the baffle 140 and is provided with a second through hole 181, and the first portion 161 covers the second through hole 181. A first portion 161 of the other insulating sheet 160 is adhered to the surface of the support block 180 that is located on the other side of the baffle 140 in the length direction distal to the baffle 140 and is provided with a second through hole 181, and the first portion 161 covers the second through hole 181.

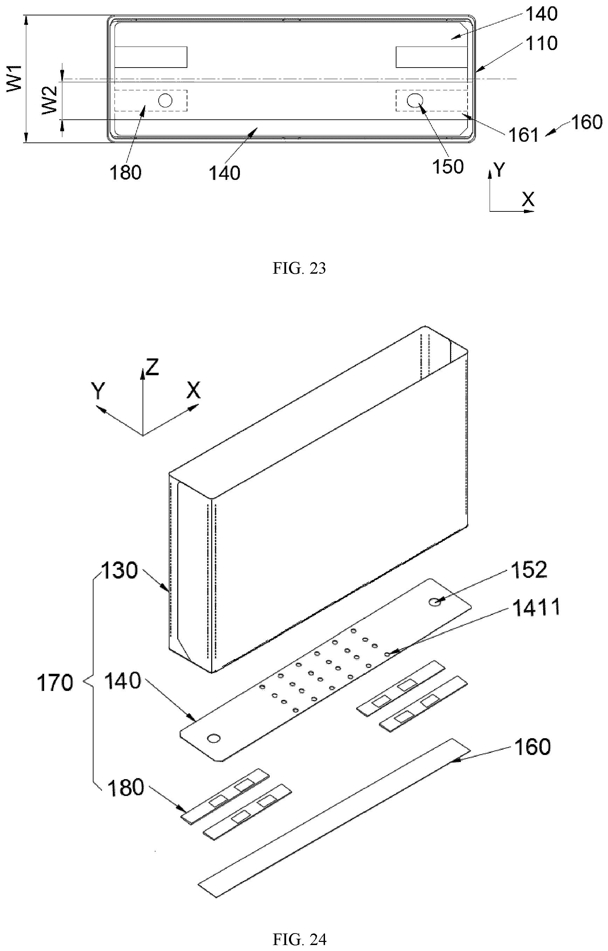

As shown in FIGs. 22 and 23, in some examples, two first through holes 150 are formed in the baffle 140, the center line of the baffle 140 in the width direction is P1, and both the first through holes 150 are formed in an area proximal to one side edge of the baffle 140 in the width direction, that is, the two first through holes 150 are located on the same side of P1. Four support blocks 180 are provided, two of the support blocks 180 are provided with second through holes 181, the two support blocks 180 are arranged at positions opposite to the first through holes 150, and the second through holes 181 in the support blocks 180 communicate with the first through holes 150. The other two support blocks 180 are not provided with the second through holes 181, and the other two support blocks 180 are arranged in an area where no first through hole 150 is formed. One insulating sheet 160 is provided, two sides of the first portion 161 of the insulating sheet 160 along the X direction are adhered to the two support blocks 180 provided with the second through holes 181, respectively, and the first portion 161 of the insulating sheet 160 covers the two second through holes 181.

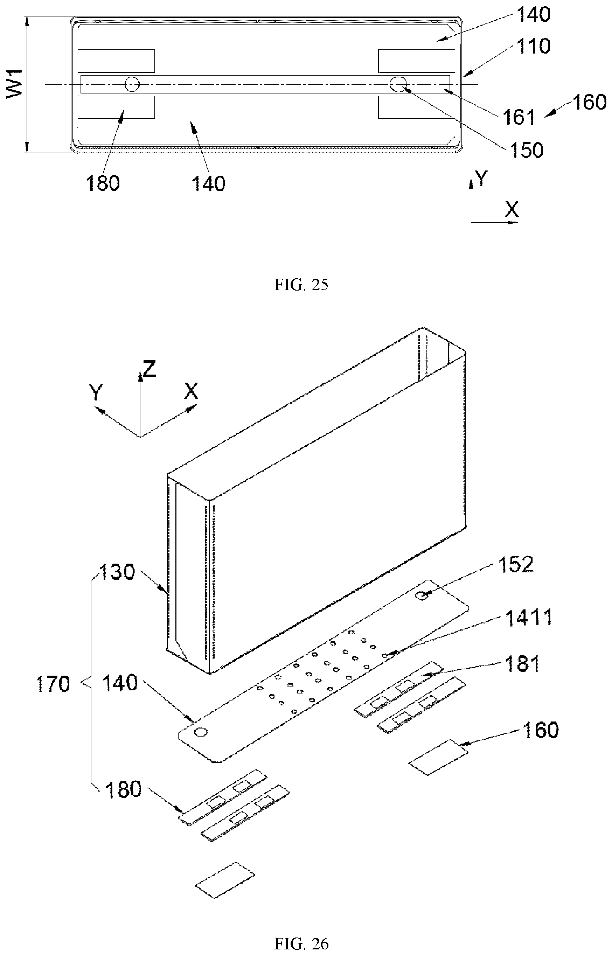

As shown in FIGs. 24 and 25, in some examples, two first through holes 150 are formed in the baffle 140, a center line of the baffle 140 in the width direction is P1, and center points of the two first through holes 150 are located at P1, that is, the two first through holes 150 are centrally formed in the width direction of the baffle 140; four support blocks 180 are provided, none of the four support blocks 180 is provided with the second through hole 181, and all of the four support blocks 180 are arranged in an area where no first through hole 150 is formed, that is, the first through holes 150 are not blocked by any one of the support blocks 180. One insulating sheet 160 is provided, a first portion 161 of the insulating sheet 160 is adhered to the baffle 140, and two sides of the first portion 161 of the insulating sheet 160 along the X direction cover the two second through holes 181, respectively.

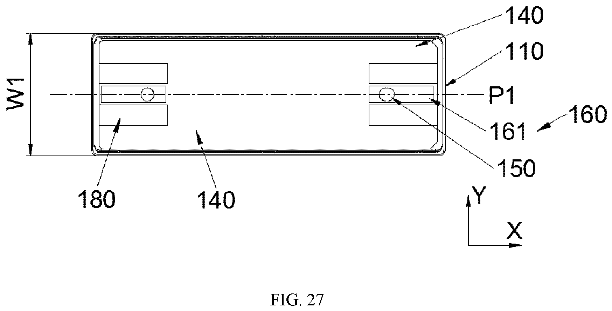

As shown in FIGs. 26 and 27, in some examples, two first through holes 150 are formed in the baffle 140, a center line of the baffle 140 in the width direction is P1, and center points of the two first through holes 150 are located at P1, that is, the two first through holes 150 are centrally formed in the width direction of the baffle 140; four support blocks 180 are provided, none of the four support blocks 180 is provided with the second through hole 181, and all of the four support blocks 180 are arranged in an area where no first through hole 150 is formed, that is, the first through holes 150 are not blocked by any one of the support blocks 180. Two insulating sheets 160 are provided, the two insulating sheets 160 are adhered to the baffle structure at an interval, and the first portions 161 of the two insulating sheets 160 cover the two first through holes 150, respectively.

As shown in FIGs. 18, 24 and 26, in one arrangement, third through holes 1411 are formed in the baffle 140, the third through holes 1411 penetrate through the baffle 140 in the Z direction, and the third through holes 1411 can communicate with two opposite surfaces of the baffle 140 in the Z direction, such that airflows on two sides of the baffle 140 in the Z direction can flow mutually, thereby increasing the number of airflow paths in the battery cell and improving the airflow circulation performance in the battery cell. Meanwhile, the arrangement of the third through holes 1411 in the baffle 140 may also reduce the weight of the baffle 140, resulting in a lighter weight of the battery cell.

In one arrangement, a plurality of third through holes 1411 in the baffle 140 are provided, the plurality of third through holes 1411 are all formed in the middle area of the baffle 140, the plurality of third through holes 1411 may be disposed on the baffle 140 in an array manner, and in the X direction, the first through holes 150 are formed on two sides of the array area formed by the plurality of third through holes 1411.

The cross-sectional dimension of each third through hole 1411 is smaller than that of the first through hole 150, when the first through hole 150 includes a first hole segment 151 and a second hole segment 152, the cross-sectional dimensions of the first hole segment 151 and the second hole segment 152 may be equal or unequal, and when the cross-sectional dimensions of the first hole segment 151 and the second hole segment 152 are unequal, the cross-sectional dimension of the third through hole 1411 is smaller than that of the smaller one of the first hole segment 151 and the second hole segment 152. That is, compared to the first through hole 150, the dimension of the third through hole 1411 is relatively smaller.

The embodiments of the present application further provide an example of a battery 10 on the basis of the battery cell 100 described above. The battery 10 includes the battery cell 100 according to any one of the above embodiments.

The battery 10 may be a battery 10 module, and when there are a plurality of battery cells 100, the plurality of battery cells 100 are disposed and fixed to form one battery 10 module.

The battery 10 may be a battery 10 pack. The battery 10 pack includes a case 200 and a battery cell 100, and the battery cell 100 or the battery 10 module is accommodated in the case 200. Where, the case 200 is configured to provide an accommodating space for the battery cell 100 or the battery 10 module, and the case 200 may be independent of other structures of the electric device 1, or the case 200 may be a part of other structures of the electric device 1. Illustratively, when the electric device 1 is a vehicle, the case 200 may be a part of a chassis of the vehicle. For example, a part of the case 200 may become at least a part of a floor of the vehicle, or a part of the case 200 may become at least a part of the crossbeam and the longitudinal beam of the vehicle.

In the battery 10 pack, there may be a plurality of battery cells 100, and the plurality of battery cells 100 may be connected in series, in parallel, or in series-parallel. The series-parallel connection means that both series connection and parallel connection are present for the connection among the plurality of battery cells 100. The plurality of battery cells 100 may be directly connected in series, in parallel, or in series-parallel, and then the whole formed by the plurality of battery cells 100 is accommodated in the case 200. Certainly, it may be that in the battery 10, the plurality of battery cells 100 are first connected in series, in parallel, or in series-parallel to form battery 10 modules, and then the plurality of battery 10 modules are connected in series, in parallel, or in series-parallel to form a whole and accommodated in the case 200.

The battery 10 may further include other structures. For example, the battery 10 may further include a busbar component for achieving electrical connection between the plurality of battery cells 100.

It can be understood that only the battery 10 including the battery cell 100 described above is described in this example, and the battery 10 may further include other functional components, which are not described in detail herein.

As the battery 10 includes the battery cell 100 according to the above embodiments, the battery 10 at least includes all the technical effects of the battery cell 100, which is not described in detail herein.

The embodiments of the present application provide an electric device 1, which includes the battery 10 of the above embodiments, the battery 10 being configured to provide electric energy.

As the electric device 1 includes the battery 10 described above, the electric device at least has all the beneficial effects of the battery 10, which is not described in detail herein.

The electric device 1 may be, but is not limited to, a mobile phone, a tablet or laptop computer, an electric toy, an electric tool, an electric bike, an electric car, a ship, a spacecraft, and the like. The electric toy may include a stationary or mobile electric toy, such as a game console, an electric car toy, an electric ship toy, and an electric airplane toy, and the spacecraft may include an airplane, a rocket, a space shuttle, a spaceship, and the like.

For the convenience of description, an embodiment of the present application in which a vehicle is taken as the example of the electric device 1 is used for description. The vehicle may be a fuel vehicle, a gas vehicle, or a new energy vehicle. The new energy vehicle may be a pure electric vehicle, a hybrid vehicle, an extended-range vehicle, or the like. A battery 10 is arranged inside the vehicle, and the battery 10 may be arranged at the bottom, head, or tail of the vehicle. The battery 10 may be configured to supply power to the vehicle. For example, the battery 10 may serve as an operation power source of the vehicle. The vehicle may further include a controller and a motor. The controller is configured to control the battery 10 to supply power to the motor, e.g., for operation power needed for starting, navigating, and driving of the vehicle.

In some embodiments of the present application, the battery 10 may not only serve as the operation power source for the vehicle, but also as a driving power source for the vehicle to, instead of or in part instead of fuel or natural gas, provide driving power for the vehicle.

As shown in FIGs. 3 to 8, in a specific embodiment of the embodiments of the present application, provided is a battery cell 100. The battery cell 100 includes a shell 110, an electrode assembly 120, a separation structure 170, and insulating sheets 160. Where, the shell 110 is provided with an inner cavity, and the shell 110 is provided with a first wall 111; the first wall 111 is specifically a bottom wall of the shell 110, and the first wall 111 is parallel to the X direction and the Y direction. The electrode assembly 120 and the separation structure 170 are both installed in the inner cavity, the separation structure 170 is at least partially located between the first wall 111 and the electrode assembly 120, and the separation structure 170 is provided with first through holes 150, the first through holes 150 are formed in an area of the separation structure 170 between the first wall 111 and the electrode assembly 120, and the first through holes 150 penetrate through the separation structure 170 in the Z direction. The separation structure 170 includes a baffle 140 and an insulating film 130, the insulating film 130 wraps the outer side of the electrode assembly 120, and the insulating film 130 is at least partially located between the electrode assembly 120 and the first wall 111. Specifically, the insulating film 130 includes a first film layer 131 and a second film layer 132, where the first film layer 131 is located between the electrode assembly 120 and the first wall 111, the second film layer 132 at least partially wraps the circumferential side surface of the electrode assembly 120, and the first film layer 131 and the second film layer 132 are of an integral structure. Specifically, the insulating film 130 is a whole film layer, the second film layer 132 is divided into two parts, which are respectively referred to as a first sub-film layer and a second sub-film layer, where the first sub-film layer and the second sub-film layer are located on two opposite sides of the first film layer 131, respectively; in the X direction, the first folded edges 132a are arranged on two sides of the first sub-film layer, the second folded edges 132b are arranged on two sides of the second sub-film layer, the first folded edges 132a and the second folded edges 132b are arranged in one-to-one correspondence, and after being folded, one of the first folded edges 132a and one of the second folded edges 132b partially overlap each other, and the other first folded edge 132a and the other second folded edge 132b partially overlap each other. The number of the insulating sheets 160 is the same as the number of the first folded edges 132a; in the embodiments of the present application, two first folded edges 132a are provided, two insulating sheets 160 are provided, each insulating sheet 160 includes a first portion 161 and a second portion 162, and the first portion 161 and the second portion 162 have the same dimension in the Y direction. One of the second portions 162 fixes one of the first folded edges 132a and one of the second folded edges 132b, and the other second portion 162 fixes the other first folded edge 132a and the other second folded edge 132b. In the Y-axis direction, the second portion 162 is equidistant from two side edges of the separation structure 170, and the second portion 162 is connected to the first folded edge 132a and the second folded edge 132b by gluing. In this way, the second portion 162 may better fix both the first folded edge 132a and the second folded edge 132b under the condition that the joint of the first folded edge 132a and the second folded edge 132b is located in a non-edge area of the electrode assembly 120. The baffle is arranged between the insulating film 130 and the first wall 111, and specifically, between the first film layer 131 of the insulating film 130 and the first wall 111. The first through hole 150 includes a first hole segment 151 and a second hole segment 152, the first hole segment 151 and the second hole segment 152 are oppositely arranged and communicate, the first hole segment 151 is arranged on the first film layer 131 of the insulating film 130, the first hole segment 151 penetrates through the first film layer 131 of the insulating film 130, the second hole segment 152 is arranged on the baffle 140, and the second hole segment 152 penetrates through the baffle 140. The number of the first through holes 150 is equal to the number of the insulating sheets 160, and in the embodiments of the present application, two insulating sheets 160 are provided, and two first through holes 150 are also provided. A first portion 161 of the first insulating sheet 160 covers one of the first through holes 150, and a first portion 161 of the other insulating sheet 160 covers the other first through hole 150. Specifically, the first portion 161 covers one side of the second hole segment 152 of the corresponding first through hole 150 distal to the first hole segment 151, that is, the first portion 161 is adhered to one side of the baffle 140 facing the first wall 111 and covers the corresponding first hole segment 151.

As shown in FIGs. 18 and 19, in another specific embodiment of the embodiments of the present application, provided is a battery cell 100. The battery cell 100 includes a shell 110, an electrode assembly 120, a separation structure 170, and insulating sheets 160. Where, the shell 110 is provided with an inner cavity, and the shell 110 is provided with a first wall 111; the first wall 111 is specifically a bottom wall of the shell 110, and the first wall 111 is parallel to the X direction and the Y direction. The electrode assembly 120 and the separation structure 170 are both installed in the inner cavity, the separation structure 170 is at least partially located between the first wall 111 and the electrode assembly 120, and the separation structure 170 is provided with first through holes 150, the first through holes 150 are formed in an area of the separation structure 170 between the first wall 111 and the electrode assembly 120, and the first through holes 150 penetrate through the separation structure 170 in the Z direction. The separation structure 170 includes a baffle 140, an insulating film 130, and support blocks 180. The insulating film 130 wraps the outer side of the electrode assembly 120, and the insulating film 130 is at least partially located between the electrode assembly 120 and the first wall 111. Specifically, the insulating film 130 includes a first film layer 131 and a second film layer 132, where the first film layer 131 is located between the electrode assembly 120 and the first wall 111, the second film layer 132 at least partially wraps the circumferential side surface of the electrode assembly 120, and the first film layer 131 and the second film layer 132 are of an integral structure. Specifically, the insulating film 130 is a whole film layer, the second film layer 132 is divided into two parts, which are respectively referred to as a first sub-film layer and a second sub-film layer, where the first sub-film layer and the second sub-film layer are located on two opposite sides of the first film layer 131, respectively; in the X direction, the first folded edges 132a are arranged on two sides of the first sub-film layer, the second folded edges 132b are arranged on two sides of the second sub-film layer, the first folded edges 132a and the second folded edges 132b are arranged in one-to-one correspondence, and after being folded, one of the first folded edges 132a and one of the second folded edges 132b partially overlap each other, and the other first folded edge 132a and the other second folded edge 132b partially overlap each other. The number of the insulating sheets 160 is the same as the number of the first folded edges 132a; in the embodiments of the present application, two first folded edges 132a are provided, two insulating sheets 160 are provided, each insulating sheet 160 includes a first portion 161 and a second portion 162, and the first portion 161 and the second portion 162 have the same dimension in the Y direction. One of the second portions 162 fixes one of the first folded edges 132a and one of the second folded edges 132b, and the other second portion 162 fixes the other first folded edge 132a and the other second folded edge 132b. The baffle is arranged between the insulating film 130 and the first wall 111, and specifically, between the first film layer 131 of the insulating film 130 and the first wall 111, and the support blocks 180 are arranged on one side of the baffle 140 facing the first wall 111. The support block 180 is provided with a second through hole 181, the second through hole 181 of at least one of the support blocks 180 and the first through hole 150 are oppositely formed, and the first portion 161 covers the second through hole 181. The first through hole 150 includes a first hole segment 151 and a second hole segment 152, the first hole segment 151 and the second hole segment 152 are oppositely arranged and communicate, the first hole segment 151 is arranged on the first film layer 131 of the insulating film 130, the first hole segment 151 penetrates through the first film layer 131 of the insulating film 130, the second hole segment 152 is arranged on the baffle 140, and the second hole segment 152 penetrates through the baffle 140. The first hole segments 151 and the second hole segments 152 are arranged in one-to-one correspondence, and the second through holes 181 are formed in one-to-one correspondence with the second hole segments 152 of the corresponding first through holes 150. Specifically, the baffle 140 is provided with second hole segments 152 of two first through holes 150, the center line of the baffle 140 in the width direction is P1, and both the second hole segments 152 are arranged in an area proximal to one side edge of the baffle 140 in the width direction, that is, the two first through holes 150 are both located on the same side of P1. Four support blocks 180 are provided, two of the support blocks 180 are provided with second through holes 181, the two support blocks 180 are arranged at positions opposite to the first through holes 150, and the second through holes 181 in the support blocks 180 communicate with the first through holes 150. The other two support blocks 180 are not provided with the second through holes 181, and the other two support blocks 180 are arranged in an area where no first through hole 150 is formed. Two insulating sheets 160 are provided, a first portion 161 of one of the insulating sheets 160 is adhered to the surfaces of two support blocks 180 that are located on one side of the baffle 140 in the length direction distal to the baffle 140, and the first portion 161 covers the second through hole 181 of one of the support blocks 180. A first portion 161 of the other insulating sheet 160 is adhered to the surfaces of two support blocks 180 that are located on the other side of the baffle 140 in the length direction distal to the baffle 140, and the first portion 161 covers the second through hole 181 of one of the support blocks 180. In the embodiments of the present application, the baffle 140 is provided with third through holes 1411 penetrating along the Z-axis direction, and a plurality of third through holes 1411 are provided, and the plurality of third through holes 1411 are disposed between the two first through holes 150 at intervals.

Finally, it should be noted that the above embodiments are only used to illustrate the technical solutions of the present application, but not to limit them. Although the present application has been described in detail with reference to the foregoing embodiments, those of ordinary skill in the art should understand that they can still modify the technical solutions recorded in the foregoing embodiments or make equivalent substitutions for some or all of the technical features; however, these modifications or substitutions do not make the essence of the corresponding technical solutions deviate from the spirit and scope of the technical solutions in the embodiments of the present application, and these modifications or substitutions shall all fall within the scope of claims and specification of the present application. In particular, the technical features mentioned in the embodiments may be combined in any manner as long as there are no structural conflicts. The present application is not limited to the specific embodiments disclosed herein, but encompasses all technical solutions falling within the scope of the claims.

## Claims

1. A battery cell, comprising:
a shell, provided with an inner cavity, and provided with a first wall;
an electrode assembly, arranged in the inner cavity;
a separation structure, at least partially arranged between the first wall and the electrode assembly, and provided with first through holes at a portion between the first wall and the electrode assembly; and
insulating sheets, comprising first portions covering the first through holes.

2. The battery cell according to claim 1, wherein the separation structure is provided with a plurality of the first through holes, and the insulating sheets cover all of the first through holes.

3. The battery cell according to claim 2, wherein the number of the insulating sheets is equal to the number of the first through holes, the insulating sheets are arranged in one-to-one correspondence with the first through holes, and the insulating sheets cover the corresponding first through holes; or one insulating sheet is provided, and the one insulating sheet covers all of the first through holes.

4. The battery cell according to claim 1, wherein the first portion is adhered to an opening of the first through hole.

5. The battery cell according to any one of claims 1 to 4, wherein the first portion is located on one side of the separation structure facing the first wall.

6. The battery cell according to any one of claims 1 to 5, wherein the separation structure comprises a baffle and an insulating film, the baffle is located between the electrode assembly and the first wall, the insulating film is at least partially located between the electrode assembly and the first wall, the first through hole comprises a first hole segment and a second hole segment which are oppositely arranged and communicate, the first hole segment is arranged on the insulating film, the second hole segment is arranged on the baffle, and the first portion covers an opening on one side of the first hole segment distal to the second hole segment or an opening on one side of the second hole segment distal to the first hole segment.

7. The battery cell according to claim 6, wherein the insulating film is folded to wrap the electrode assembly and forms first folded edges and second folded edges overlapping each other on side edges of the electrode assembly, the insulating sheets comprise second portions, the second portions fix the first folded edges and the second folded edges, and the first portions are connected to the second portions.

8. The battery cell according to claim 7, wherein in a first direction, the second portion is spaced apart from at least one of two edges of the separation structure spaced apart in the first direction, and the first direction is parallel to a width direction of the first wall.

9. The battery cell according to claim 8, wherein in the first direction, the second portion is equidistant from two side edges of the separation structure.

10. The battery cell according to claim 9, wherein in the first direction, the shell has a width W1, and the second portion has a width W2, wherein 0.1 ≤ W2/W1 ≤ 0.9.

11. The battery cell according to claim 10, wherein 0.25 ≤ W2/W1 ≤ 0.75.

12. The battery cell according to claim 7, wherein in a height direction of the electrode assembly, the second portion has a dimension of 10 mm to 80 mm.

13. The battery cell according to claim 12, wherein in the height direction of the electrode assembly, the second portion has a dimension of 15 mm to 50 mm.

14. The battery cell according to claim 6, wherein the baffle is only provided with two holes, and the two holes in the baffle are the first hole segments; the insulating film is only provided with two holes, the two holes in the insulating film are the second hole segments, and the two first hole segments are arranged in one-to-one correspondence with the two second hole segments.

15. The battery cell according to any one of claims 6 to 14, wherein the separation structure further comprises support blocks, the baffle is arranged between the insulating film and the first wall, and the support blocks are arranged on one side of the baffle facing the first wall;
the support blocks are arranged in an area of the baffle where no first through hole is formed; or,
the support blocks are provided with second through holes, the second through hole of at least one of the support blocks and the first through hole are oppositely formed, and the first portion covers the second through hole.

16. A battery, comprising the battery cell according to any one of claims 1 to 15.

17. An electric device, wherein the electric device comprises the battery according to claim 16, the battery being configured to provide electric energy.
